(19) Europäisches Patentamt
European Patent Office
Office européen des brevets

(11) EP 2 413 317 B1

(12) **EUROPEAN PATENT SPECIFICATION**

(45) Date of publication and mention of the grant of the patent:
**24.04.2013 Bulletin 2013/17**

(21) Application number: **09842168.8**

(22) Date of filing: **02.09.2009**

(51) Int Cl.:
***G11B 7/254*** *(2013.01)* ***G11B 7/24*** *(2013.01)*
***G11B 7/257*** *(2013.01)* ***G02B 1/04*** *(2006.01)*
***C08G 18/67*** *(2006.01)*

(86) International application number:
**PCT/JP2009/004310**

(87) International publication number:
**WO 2010/109552 (30.09.2010 Gazette 2010/39)**

# (54) ULTRAVIOLET-CURABLE COMPOSITION FOR OPTICAL DISC AND OPTICAL DISC

MIT ULTRAVIOLETT AUSHÄRTBARE ZUSAMMENSETZUNG FÜR EINEN OPTISCHEN DATENTRÄGER UND OPTISCHER DATENTRÄGER

COMPOSITION DURCISSABLE PAR ULTRAVIOLET POUR DISQUE OPTIQUE ET DISQUE OPTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.03.2009 JP 2009076187**

(43) Date of publication of application:
**01.02.2012 Bulletin 2012/05**

(73) Proprietor: **DIC Corporation**
**Tokyo 174-8520 (JP)**

(72) Inventors:
- **OSHIO, Atsushi**
**Kitaadachi-gun**
**Saitama 362-8577 (JP)**
- **YAMAGUCHI, Junji**
**Kitaadachi-gun**
**Saitama 362-8577 (JP)**
- **ITO, Daisuke**
**Kitaadachi-gun**
**Saitama 362-8577 (JP)**

(74) Representative: **Beckmann, Claus**
**Kraus & Weisert**
**Patent- und Rechtsanwälte**
**Thomas-Wimmer-Ring 15**
**80539 München (DE)**

(56) References cited:
**WO-A1-00/75211**
**WO-A1-2009/004960**
**JP-A- 2005 319 459**
**JP-A- 2006 004 458**
**JP-A- 2007 102 980**
**JP-A- 2007 262 334**
**JP-A- 2008 108 416**
**JP-A- 2008 171 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 413 317 B1

## Description

Technical Field

The present invention relates to an ultraviolet curable composition suitable for a light transmitting layer of an optical disc in which at least a light reflecting layer and a light transmitting layer are formed, and recording or reproduction is performed with a semiconductor laser beam having a lasing wavelength in the range of 370 to 430 nm (hereafter, referred to as a blue laser beam) made incident on the optical disc through the light transmitting layer.

Background Art

DVDs (digital versatile discs), which are commonly used optical discs that allow for high-density recording, have a structure in which two substrates having a thickness of 0.6 mm are bonded together with an adhesive. To achieve a high density in DVDs, a laser beam having a short wavelength of 650 nm and an optical system having a high numerical aperture are used, compared with the case of CDs (compact discs).

However, to record or reproduce, for example, high-definition images for HDTV (high definition television), a further increase in the density is required. Methods for performing higher-density recording for the next generation of DVDs and optical discs to be used with the methods have been studied; and a method for performing high-density recording has been proposed that employs a new optical-disc structure with a blue laser beam having a short wavelength and an optical system having a high numerical aperture, compared with the case of DVDs.

This new optical disc has a structure in which a recording layer is formed on a transparent or opaque substrate composed of a plastic such as polycarbonate; a light transmitting layer having about 100 μm is further stacked on the recording layer; and a recording beam, a reproduction beam, or both of the beams are made incident on the optical disc through the light transmitting layer. In view of productivity, use of an ultraviolet curable composition for a light transmitting layer of such an optical disc has been actively studied.

Such an optical disc used with a blue laser beam needs to keep recording-reproduction characteristics with stability for a long period of time. Accordingly, the light transmitting layer desirably does not adversely affect the recording-reproduction characteristics due to surface deformation or scratching thereof even after being used for a long period of time. For DVDs and CDs, a recording beam or a reproduction beam is made incident on a surface composed of a plastic material such as polycarbonate. In contrast, for the above-described optical disc, a cured film of an ultraviolet curable composition serves as an incident surface and the film under a load for a long period of time has a problem of an increase in signal reproduction errors due to deformation thereof, compared with polycarbonate.

WO 2009/004960 addresses the technical problem of how to provide an optical recording disc with low warping and good reflectance values (i.e low error rate) after stress/load test

It discloses a UV curable composition comprising:

(i) urethane acrylate (UE 80-80)
(ii) urethane acrylate (UA-160TM)
(iii) 1,6-hexanediol diacrylate (PH4017)
(iv) Phenoxyethyl acrylate (PHE) (at leat this monomer corresponds to compound (b) in claim 1 of of the application)
(v) tetrahydrofurfuryl acrylate
(vi) photoinitiator (Irg184: 1-hydroxycyclohexyl phenyl ketone)
(vii) reactive polysiloxane (TEGO Rad 2200N)

*(see example 4, table* 1)

To prevent deformation of the light transmitting layer under a load, the light transmitting layer is desirably a rigid cured film. For example, an optical information medium including a light transmitting layer having a dynamic elastic modulus of 1.5 to 3.0 GPa at 25°C has been disclosed (refer to Patent Literature 1). However, this disc under a load for a long period of time has a problem of an increase in signal reproduction errors.

As an ultraviolet curable composition used for a light transmitting layer of an optical disc in which recording or reproduction is performed with a blue laser beam, for example, an ultraviolet curable composition containing a urethane acrylate from a high-molecular-weight polyol having a molecular weight of 400 or more and a polyfunctional (meth) acrylate has been disclosed (refer to Patent Literature 2). When the ultraviolet curable composition is used for a light transmitting layer, a cured film having transparency, surface hardness, and durability is provided. However, when the cured film is under a load for a long period of time, it deforms and, as a result, there are cases where signal reproduction characteristics are degraded.

As an ultraviolet curable composition used for a light transmitting layer of an optical disc in which recording or reproduction is performed with a blue laser beam, for example, an ultraviolet curable composition containing a urethane

(meth)acrylate and a polymerizable compound other than urethane (meth)acrylates has been disclosed (refer to Patent Literature 3). When the ultraviolet curable composition is used for a light transmitting layer, a light transmitting layer that has high dimensional stability in terms of change in the temperature of a use environment is provided. However, when the light transmitting layer is under a load for a long period of time, it deforms and, as a result, there are cases where signal reproduction characteristics are degraded.

Patent Literature 1: Japanese Unexamined Patent Application Publication No. 2003-123316
Patent Literature 2: Japanese Unexamined Patent Application Publication No. 2007-238819
Patent Literature 3: Japanese Unexamined Patent Application Publication No. 2009-009638

Disclosure of Invention

Technical Problem

An object of the present invention is to provide an optical disc in which warpage is less likely to be caused; errors of reproduced signals are less likely to increase even under a load for a long period of time; recovery from the errors is achieved over time; and, as a result, signal reproduction can be appropriately achieved. Solution to Problem

An ultraviolet curable composition for an optical disc according to the present invention includes a radical polymerizable compound and a polymerization initiator, the radical polymerizable compound including a (meth)acrylate compound (a) that does not intramolecularly have a cyclic moiety and has a functionality of three or more and a monofunctional (meth)acrylate compound (b) that forms a homopolymer having a glass transition temperature of 20°C or less. As for an ultraviolet curable composition according to the present invention, a coating film having been cured with ultraviolet rays has a large number of crosslinking points due to a (meth)acrylate compound that does not intramolecularly have a cyclic moiety and has a functionality of three or more and, since the compound does not intramolecularly have a cyclic moiety, plastic deformation due to a cyclic moiety is less likely to occur. In addition, a monofunctional (meth) acrylate compound that forms a homopolymer having a glass transition temperature of 20°C or less has a low glass transition temperature and is flexible. Accordingly, curing contraction caused in ultraviolet curing can be suppressed and plastic deformation is less likely to occur in the resultant cured film in a temperature range of room temperature or more. Thus, in an optical disc employing, as a light transmitting layer, a cured product of an ultraviolet curable resin composition according to the present invention, warpage is less likely to be caused; and recovery from deformation caused even by application of a load for a long period of time or as a result of an impact due to falling is rapidly achieved. Accordingly, errors of reproduced signals are less likely to increase and recovery from the errors is achieved over time; and, as a result, signal reproduction can be appropriately achieved.

Advantageous Effects of Invention

In an optical disc in which an ultraviolet curable composition for an optical disc according to the present invention is used, warpage is less likely to be caused; errors of reproduced signals are less likely to increase even under a load for a long period of time; recovery from the errors is achieved over time; and, as a result, signal reproduction can be appropriately achieved.

Best Modes for Carrying Out the Invention

[Ultraviolet curable composition for optical disc]

An ultraviolet curable composition for an optical disc according to the present invention includes a radical polymerizable compound and a polymerization initiator, the radical polymerizable compound including a (meth)acrylate compound (a) that does not intramolecularly have a cyclic moiety and has a functionality of three or more and a monofunctional (meth)acrylate compound (b) that forms a homopolymer having a glass transition temperature of 20°C or less. The optical-disc ultraviolet curable composition is used for a light transmitting layer of an optical disc in which at least a light reflecting layer and the light transmitting layer are stacked on a substrate, and information is reproduced by making a laser beam be incident on the optical disc from a side of the light transmitting layer.

[(Meth)acrylate compound (a) that does not intramolecularly have cyclic moiety and has functionality of three or more]

As a (meth)acrylate compound (a) that has a functionality of three or more and is used in the present invention, a (meth)acrylate compound that is publicly known and commonly used may be appropriately used as long as it does

not intramolecularly have a cyclic moiety and has a functionality of three or more. By using the component (a), a coating film having been cured with ultraviolet rays has a structure with high crosslinking density; plastic deformation is less likely to be caused in the coating film even under a load for a long period of time; and appropriate signal reproduction characteristics can be achieved. In particular, in the absence of intramolecular cyclic moieties, plastic deformation due to a cyclic moiety is less likely to be caused.

In particular, consider a case where the (meth)acrylate compound (a) that has a functionality of three or more is one or more compounds selected from a compound (a-1) represented by a formula (I)

[Chem. 1]

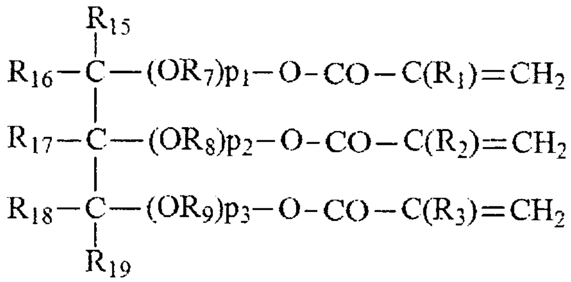

(I)

[where $R_1$ to $R_3$ each independently represent a hydrogen atom or a methyl group; $R_7$ to $R_9$ each independently represent $-CH(R_{13})-CH(R_{14})-$ (where $R_{13}$ and $R_{14}$ each independently represent a hydrogen atom or an alkyl group having 1 to 5 carbon atoms) or $-(CH_2)_4-$; $p_1$ to $p_3$ each independently represent an integer of 0 to 10; and $R_{15}$ to $R_{19}$ each independently represent a hydrogen atom or an alkyl group having 1 to 10 carbon atoms.];
a compound (a-2) represented by a formula (II)

[Chem. 2]

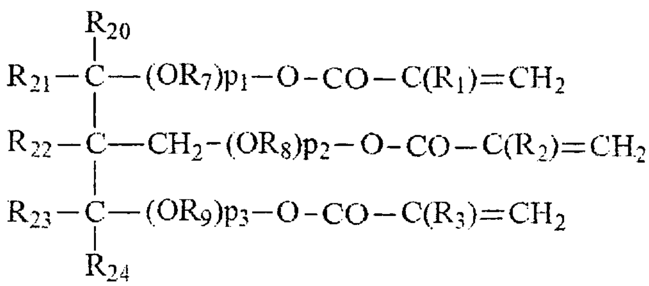

(II)

[where $R_1$ to $R_3$ each independently represent a hydrogen atom or a methyl group; $R_7$ to $R_9$ each independently represent $-CH(R_{13})-CH(R_{14})-$ (where $R_{13}$ and $R_{14}$ each independently represent a hydrogen atom or an alkyl group having 1 to 5 carbon atoms) or $-(CH_2)_4-$; $p_1$ to $p_3$ each independently represent an integer of 0 to 10; and $R_{20}$ to $R_{24}$ each independently represent a hydrogen atom or an alkyl group having 1 to 10 carbon atoms.];
a compound (a-3) represented by a formula (III)

[Chem. 3]

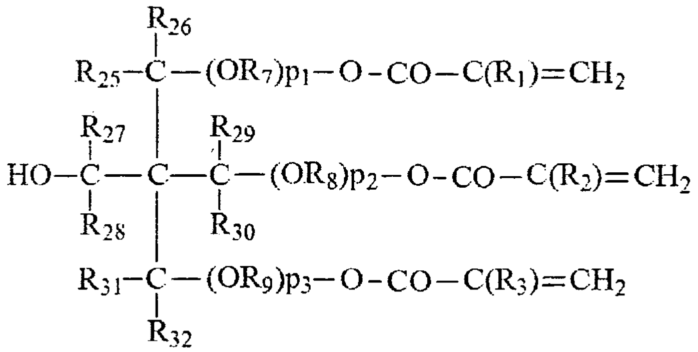

(III)

[where $R_1$ to $R_3$ each independently represent a hydrogen atom or a methyl group; $R_7$ to $R_9$ each independently represent - $CH(R_{13})$-$CH(R_{14})$- (where $R_{13}$ and $R_{14}$ each independently represent a hydrogen atom or an alkyl group having 1 to 5 carbon atoms) or -$(CH_2)_4$-; $p_1$ to $p_3$ each independently represent an integer of 0 to 10; and $R_{25}$ to $R_{32}$ each independently represent a hydrogen atom or an alkyl group having 1 to 10 carbon atoms.];
a compound (a-4) represented by a formula (IV)

[Chem. 4]

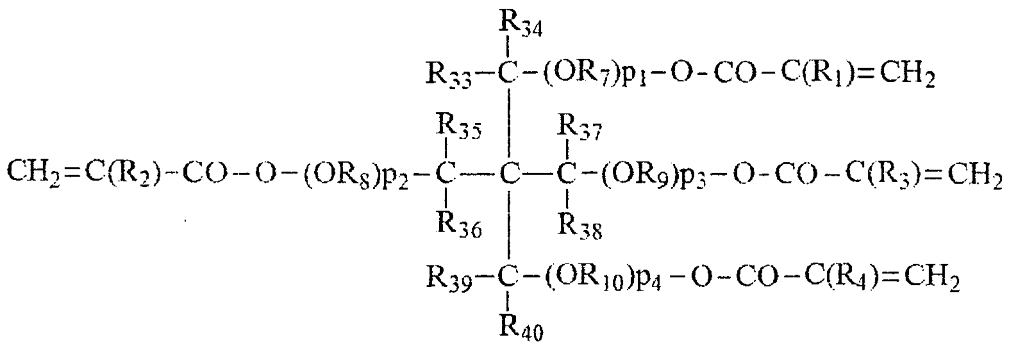

(IV)

[where $R_1$ to $R_4$ each independently represent a hydrogen atom or a methyl group; $R_7$ to $R_{10}$ each independently represent - $CH(R_{13})$)-$CH(R_{14})$)- (where $R_{13}$ and $R_{14}$ each independently represent a hydrogen atom or an alkyl group having 1 to 5 carbon atoms) or -$(CH_2)_4$-; $p_1$ to $p_4$ each independently represent an integer of 0 to 10; and $R_{33}$ to $R_{40}$ each independently represent a hydrogen atom or an alkyl group having 1 to 10 carbon atoms.]; and
a compound (a-5) represented by a formula (V)

[Chem. 5]

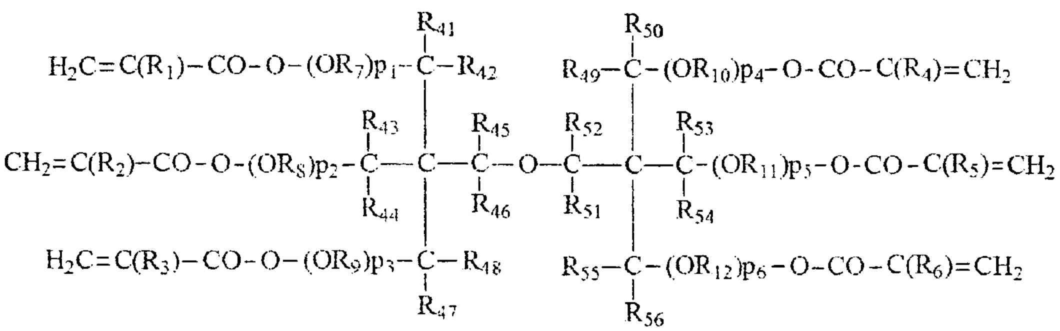

(V)

[where $R_1$ to $R_6$ each independently represent a hydrogen atom or a methyl group; $R_7$ to $R_{12}$ each independently

represent - $CH(R_{13})$-$CH(R_{14})$- (where $R_{13}$ and $R_{14}$ each independently represent a hydrogen atom or an alkyl group having 1 to 5 carbon atoms) or $-(CH_2)_4-$; $p_1$ to $p_6$ each independently represent an integer of 0 to 10; and $R_{41}$ to $R_{56}$ each independently represent a hydrogen atom or an alkyl group having 1 to 10 carbon atoms.]. In this case, in contrast to cases of using polyfunctional monomers having cyclic moieties such as an isocyanuric ring, an aromatic ring, and an aliphatic ring, a cured film is provided that has a dominant elastic term in which recovery from deformation even due to the application of a load can be achieved in a short period of time, which is preferable.

In the formulae (I) to (V), particularly preferred are trifunctional (meth)acrylates such as glycerin tri(meth)acrylate, trimethylolpropane tri(meth)acrylate, pentaerythritol tri(meth)acrylate, pentaerythritol tetra(meth)acrylate, dipentaerythritol hexa(meth)acrylate, tri(meth)acrylate of an ethylene oxide or propylene oxide adduct of glycerin, tri(meth)acrylate of an ethylene oxide or propylene oxide adduct of trimethylol propane, tri(meth)acrylate of an ethylene oxide or propylene oxide adduct of pentaerythritol, tetra(meth)acrylate of an ethylene oxide or propylene oxide adduct of pentaerythritol, and hexa(meth)acrylate of an ethylene oxide or propylene oxide adduct of dipentaerythritol.

In particular, triacrylate of a triol obtained by adding 3 mol of ethylene oxide to 1 mol of trimethylol propane and triacrylate of a triol obtained by adding 6 mol of ethylene oxide to 1 mol of trimethylol propane are more preferably used because an appropriate elastic modulus is achieved, warpage can be reduced, and plastic deformation is less likely to occur.

In an ultraviolet curable composition according to the present invention, the content of the component (a) with respect to the total amount of the radical polymerizable compound of the ultraviolet curable composition is preferably 5 to 70 mass%, more preferably 10 to 50 mass%, most preferably 15 to 35 mass% because an appropriate elastic modulus is achieved, warpage can be reduced, and plastic deformation is less likely to occur.

[Monofunctional (meth)acrylate compound (b) that forms homopolymer having glass transition temperature of 20°C or less]

As a monofunctional (meth)acrylate compound (b) that is used in the present invention, a monofunctional (meth) acrylate compound that is publicly known and commonly used may be appropriately used as long as it forms a homopolymer having a glass transition temperature of 20°C or less, preferably 0°C or less, more preferably -20°C or less. By using the component (b), curing contraction caused in UV curing can be suppressed and the elastic term in a temperature range of room temperature or more can be made dominant. Thus, plastic deformation is less likely to be caused even under a load for a long period of time and appropriate signal reproduction characteristics can be achieved.

The glass transition temperature of a homopolymer of a monofunctional (meth)acrylate compound can be measured by, for example, a method in which a monofunctional (meth)acrylate compound is irradiated with ultraviolet rays to prepare a homopolymer, the homopolymer is subjected to a dynamic viscoelastic measurement to obtain the peak value of tanδ, and the glass transition temperature is determined from the peak value of tanδ; or a method in which the homopolymer is subjected to a differential scanning calorimeter (DSC) measurement and the glass transition temperature is determined from the obtained second-order transition temperature. Specifically, 1-hydroxycyclohexylphenyl ketone is added to a monofunctional (meth)acrylate compound serving as a monomer such that the percentage of 1-hydroxycyclohexylphenyl ketone is 3 wt% to dissolve the monomer. The resultant solution is irradiated with ultraviolet rays at 5 $J/cm^2$ to prepare a homopolymer. When the homopolymer is formed in the form of a film, the homopolymer is subjected to a dynamic viscoelastic measurement and the thus-determined temperature of the peak of tanδ should be defined as the glass transition temperature. When the homopolymer is not formed in the form of a film, the homopolymer is subjected to a DSC measurement and the thus-determined second-order transition temperature should be defined as the glass transition temperature.

Examples of the monofunctional (meth)acrylate compound (b) that forms a homopolymer having a glass transition temperature of 20°C or less include lauryl acrylate, isodecyl acrylate, isostearyl acrylate, lauryl alcohol ethoxy acrylate, phenoxyethyl acrylate, phenoxyethoxyethyl acrylate, phenolpolyalkoxy acrylate, nonylphenoxyethyl acrylate, nonylphenol ethylene-oxide-modified acrylate, nonylphenol polyethylene-oxide-modified acrylate, nonylphenol polypropylene-oxide-modified acrylate, butoxypolypropylene glycol acrylate, tetrahydrofurfuryl acrylate, tetrahydrofurfuryl alcohol lactone-modified acrylate, lactone-modified 2-hydroxyethyl acrylate, and 2-ethylhexylcarbitol acrylate.

Of these, when phenoxyethyl acrylate or ethylcarbitol acrylate is used, change in warpage becomes small, which is preferable. Furthermore, when ethylcarbitol acrylate is used, plastic deformation is less likely to occur in a temperature range of room temperature or more and appropriate signal reproduction characteristics can be achieved, which is particularly preferable.

In an ultraviolet curable composition according to the present invention, the content of the component (b) with respect to the total amount of the radical polymerizable compound of the ultraviolet curable composition is preferably 5 to 70 mass%, more preferably 10 to 50 mass%, most preferably 15 to 35 mass% because an appropriate elastic modulus is achieved, warpage can be reduced, and plastic deformation is less likely to occur.

An ultraviolet curable composition according to the present invention may contain, in addition to the components

(a) and (b), another radical polymerizable compound: a (meth)acrylate oligomer and/or a (meth)acrylate monomer other than the components (a) and (b).

[(Meth)acrylate oligomer]

A (meth)acrylate oligomer used for an ultraviolet curable composition for forming a light transmitting layer is not particularly limited and examples thereof include various urethane (meth)acrylates, epoxy (meth)acrylates, polyester (meth)acrylates, and polyether (meth)acrylates. Of these, urethane (meth)acrylates and epoxy (meth)acrylates can be preferably used. In particular, compared with use of urethane (meth)acrylates, when epoxy (meth)acrylates are used, the resultant cured films have a dominant elastic term in which recovery from deformation even due to the application of a load can be achieved over time and a decrease in the light reflectivity of light reflecting layers on exposure to light can be suppressed, which is preferable.

The content of an oligomer in (meth)acrylates in an ultraviolet curable composition according to the present invention may be appropriately adjusted by changing the combination of a (meth)acrylate oligomer and a (meth)acrylate monomer that are used. The content of such an oligomer with respect to a radical polymerizable compound contained in the ultraviolet curable composition is preferably 80 mass% or less, more preferably 20 to 60 mass% because a light transmitting layer having a large-thickness can be appropriately formed.

An epoxy (meth)acrylate used in the present invention is, for example, preferably an epoxy (meth)acrylate represented by the following formula (1).

[Chem. 6]

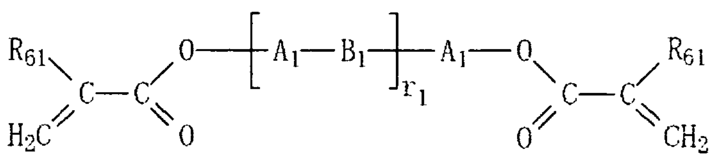

(1)

In the formula (1), $R_{61}$s each independently represent a hydrogen atom or a methyl group. $R_{61}$s preferably represent a hydrogen atom to provide good curability. In the formula (1), $r_1$ represents 1 to 15. In particular, to provide a good coating property, $r_1$ preferably represents 1 to 10, more preferably 1 to 8.

In the formula (1), $A_1$ is a group represented by the following formula (2).

[Chem. 7]

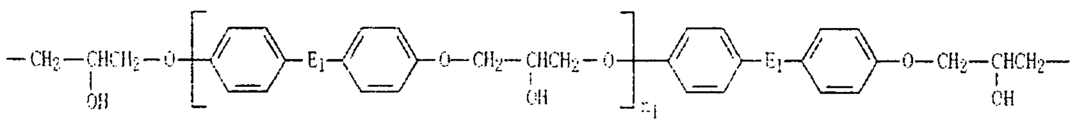

(2)

In the formula (2), $E_1$s each independently represent $SO_2$-, $-CH_2$-, $-CH(CH_3)$-, or $-C(CH_3)_2$-, and $n_1$ represents an integer of 0 to 8. Examples of such a group represented by the formula (2) include a residual moiety in which epoxy groups at both ends are removed from a bisphenol A epoxy resin, a residual moiety in which epoxy groups at both ends are removed from a bisphenol S epoxy resin, a residual moiety in which epoxy groups at both ends are removed from a bisphenol F epoxy resin, and a residual moiety in which epoxy groups at both ends are removed from a bisphenol AD epoxy resin. In the formula (2), $E_1$s preferably represent - $C(CH_3)_2$- because good mechanical properties are provided while flexibility is maintained: specifically, for example, the formula (2) preferably represents a residual moiety in which epoxy groups at both ends are removed from a bisphenol A epoxy resin. In the formula (2), $n_1$ preferably represents an integer of 0 to 6 to provide a good coating property.

$B_1$ in the formula (1) is one or more groups selected from the group consisting of the following formulae (3), (4), and (5).

[Chem. 8]

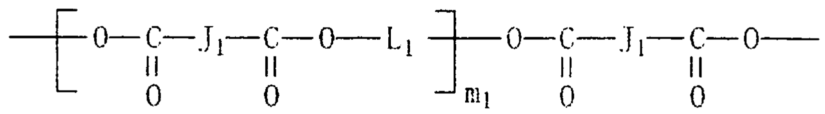

(3)

[Chem. 9]

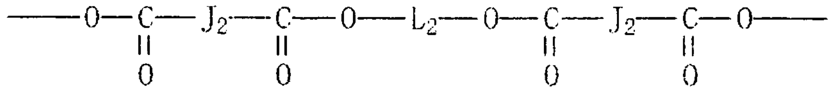

(4)

[Chem. 10]

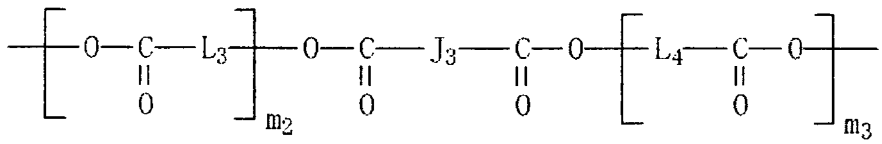

(5)

In the groups represented by the formulae (3), (4), and (5), $J_1$ to $J_3$ represent a divalent aromatic hydrocarbon group or a divalent aliphatic hydrocarbon group having 2 to 20 carbon atoms. Examples of the divalent aromatic hydrocarbon group include an o-phenylene group, a m-phenylene group, a p-phenylene group, an o-xylene-α,α'-diyl group, a m-xylene-α,α'-diyl group, and a p-xylene-α,α'-diyl group. Examples of the divalent aliphatic hydrocarbon group include $C_{2-20}$ alkylene groups such as an ethylene group, a propylene group, a butylene group, a hexamethylene group, an octamethylene group, a decamethylene group, a dodecamethylene group, a hexadecamethylene group, and an octadecamethylene group; and alicyclic hydrocarbon groups such as a cyclopentane-diyl group and a cyclohexane-diyl group. $J_1$ to $J_3$ preferably represent a divalent $C_{2-10}$ aliphatic hydrocarbon group to provide good flexibility, more preferably a $C_{3-8}$ alkylene group.

A hydrogen atom in the divalent aromatic hydrocarbon group may be replaced with an alkyl group. By using a divalent aromatic hydrocarbon group in which a hydrogen atom is replaced with an alkyl group as $J_1$ to $J_3$, compatibility in the resin composition can be controlled, which is advantageous.

Examples of the alkyl group include a methyl group, an ethyl group, a propyl group, a hexyl group, and an octyl group. Among alkyl groups, alkyl groups having 1 to 6 carbon atoms are preferred in terms of compatibility.

The divalent aliphatic hydrocarbon group may be linear or branched.

In the group represented by the formula (3), $L_1$ represents a divalent aliphatic hydrocarbon group having 2 to 20 carbon atoms or -(RO)q-R- (R represents an alkylene group having 2 to 8 carbon atoms). Examples of the divalent aliphatic hydrocarbon having 2 to 20 carbon atoms include the divalent aliphatic hydrocarbon groups having 2 to 20 carbon atoms and exemplified above for $J_1$ to $J_3$. Among divalent aliphatic hydrocarbon groups having 2 to 20 carbon atoms, $C_{2-4}$ alkylene groups are preferred in terms of flexibility. The divalent aliphatic hydrocarbon having 2 to 20 carbon atoms may have a branched chain. Examples of the alkylene group having 2 to 8 carbon atoms for R above include an ethylene group, a propylene group, a butylene group, a hexamethylene group, and an octamethylene group. Among alkylene groups, $C_{2-6}$ alkylene groups are preferred in terms of flexibility. In -(RO)q-R-, q represents an integer of 1 to 10. In particular, $C_{2-4}$ alkylene groups are preferred in terms of flexibility. As $L_1$, $C_{2-4}$ alkylene groups are preferred in terms of flexibility.

In the group represented by the formula (3), $m_1$ represents an integer of 1 to 20; and $k_1$ represents 1 to 10 in terms of durability.

In the group represented by the formula (4), $L_2$ represents an alkyl diol residue or a polyether diol residue, each of which has a number-average molecular weight of 250 to 10,000.

In the group represented by the formula (4), $L_3$ and $L_4$ each independently represent a divalent aliphatic hydrocarbon group having 2 to 10 carbon atoms. Examples of the aliphatic hydrocarbon group include $C_{2-10}$ alkylene groups such as an ethylene group, a propylene group, a butylene group, a hexamethylene group, and an octamethylene group; and divalent aliphatic hydrocarbon groups having 2 to 10 carbon atoms such as a cyclopentane-diyl group and a cyclohexane-diyl group. Such a divalent aliphatic hydrocarbon having 2 to 10 carbon atoms may have a branched

chain. $m_2$ and $m_3$ each independently represent an integer of 1 to 20.

Among the formulae (3), (4), and (5), the formula (3) is preferred because high durability and high flexibility are provided.

Examples of an epoxy (meth)acrylate represented by the formula (1) include a reaction product of a polyester dicarboxylic acid generated from ethylene glycol and adipic acid, a bisphenol A epoxy resin, and acrylic acid; a reaction product of a polyester dicarboxylic acid generated from propylene glycol and adipic acid, a bisphenol A epoxy resin, and acrylic acid; a reaction product of a polyester dicarboxylic acid generated from ethylene glycol and adipic acid, a bisphenol F epoxy resin, and acrylic acid; a reaction product of a polyester dicarboxylic acid generated from propylene glycol and adipic acid, a bisphenol F epoxy resin, and acrylic acid; a reaction product of a polyester dicarboxylic acid generated from ethylene glycol and adipic acid, a bisphenol A epoxy resin, and methacrylic acid; a reaction product of a polyester dicarboxylic acid generated from propylene glycol and adipic acid, a bisphenol A epoxy resin, and methacrylic acid; a reaction product of a polyester dicarboxylic acid generated from ethylene glycol and sebacic acid, a bisphenol A epoxy resin, and acrylic acid; a reaction product of a polyester dicarboxylic acid generated from propylene glycol and sebacic acid, a bisphenol A epoxy resin, and acrylic acid; a reaction product of a polyester dicarboxylic acid generated from ethylene glycol and hexahydrophthalic anhydride, a bisphenol A epoxy resin, and acrylic acid; and a reaction product of a polyester dicarboxylic acid generated from propylene glycol and hexahydrophthalic anhydride, a bisphenol A epoxy resin, and acrylic acid.

An epoxy (meth)acrylate represented by the formula (1) includes in the skeleton thereof a rigid bisphenol epoxy moiety represented by the formula (2) and a flexible polyester moiety represented by the formulae (3) to (5). As a result, the elastic modulus of the resultant cured film can be made low and distortion within the cured film due to curing can be relieved to suppress warpage. When the composition is used for a light transmitting layer in an optical disc having a reflecting film composed of silver or a silver alloy, high durability and high light resistance can be provided.

A modified epoxy acrylate represented by the following formula (6) can be preferably used.

[Chem. 11]

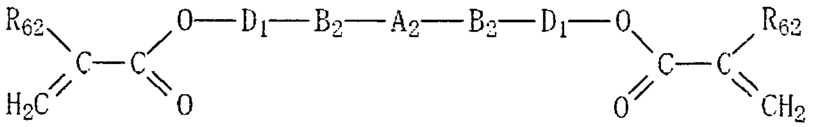

(6)

[in the formula (6), $R_{62}$s each independently represent a hydrogen atom or a methyl group; $A_2$ is a group represented by a formula (7)

[Chem. 12]

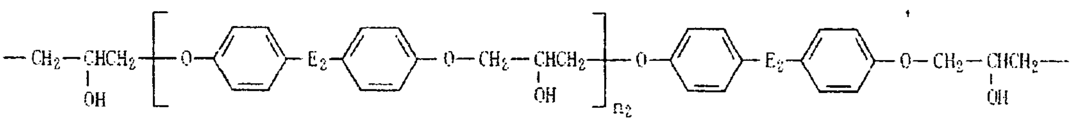

(7)

(in the formula (7), $E_2$ represents $-SO_2-$, $-CH_2-$, $-CH(CH_3)-$, or $-C(CH_3)_2-$, and $n_2$ represents an integer of 0 to 8), and $B_2$ is a group represented by a formula (8)

[Chem. 13]

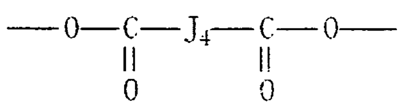

(8)

(in the formula (8), $J_4$ represents a divalent aromatic hydrocarbon group in which a hydrogen atom may be replaced with an alkyl group having 1 to 6 carbon atoms or a divalent aliphatic hydrocarbon group that has 2 to 10 carbon atoms and may have a branched chain), and

$D_1$ is a group represented by a formula (9)

[Chem. 14]

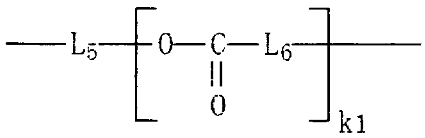

(9)

(in the formula (9), $L_5$ and $L_6$ each independently represent a divalent aliphatic hydrocarbon group that has 2 to 10 carbon atoms and may have a branched chain; and $k_1$ each independently represent an integer of 1 to 20), or a formula (10)

[Chem. 15]

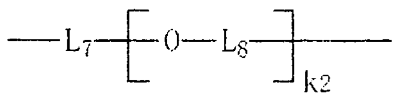

(10)

(in the formula (10), $L_7$ and $L_8$ each independently represent a divalent aliphatic hydrocarbon group that has 2 to 10 carbon atoms and may have a branched chain; and $k_2$ each independently represent an integer of 1 to 20.)).

A modified epoxy acrylate represented by the formula (6) can be produced by, for example, allowing a hydroxyalkyl (meth)acrylate (a1) to react with a dicarboxylic anhydride (a2) and an epoxy resin (a3).

The hydroxyalkyl (meth)acrylate (a1) is preferably a lactone adduct of a hydroxyalkyl (meth)acrylate. Such a lactone adduct can be produced by ring-opening addition of a lactone to a hydroxyalkyl (meth)acrylate.

Examples of such a hydroxyalkyl (meth)acrylate used in the preparation of a lactone adduct of a hydroxyalkyl (meth)acrylate include 2-hydroxyethyl (meth)acrylate, 2-hydroxypropyl (meth)acrylate, and 4-hydroxybutyl (meth)acrylate.

Examples of such a lactone include β-propiolactone, β-butyrolactone, γ-butyrolactone, γ-valerolactone, δ-valerolactone, γ-caprolactone, and ε-caprolactone.

As a lactone adduct of a hydroxyalkyl (meth)acrylate, a lactone adduct of 2-hydroxyethyl acrylate is preferable; in particular, a lactone adduct in which 1 or 2 mol of a lactone on average is added to 1 mol of 2-hydroxyethyl acrylate is preferable. In addition, an ε-caprolactone adduct of 2-hydroxyethyl acrylate is preferable; and an ε-caprolactone adduct in which 1 or 2 mol of ε-caprolactone is added to 2-hydroxyethyl acrylate is preferable in view of properties of a cured coating film.

Note that ε-caprolactone (1 mol) adduct 2-hydroxyethyl acrylate, ε-caprolactone (2 mol) adduct 2-hydroxyethyl acrylate, ε-caprolactone (3 mol) adduct 2-hydroxyethyl acrylate, are commercially available.

Examples of the dicarboxylic anhydride (a2) include maleic anhydride, phthalic anhydride, succinic anhydride, tetrahydrophthalic anhydride, and hexahydrophthalic anhydride. In particular, phthalic anhydride is preferable.

Examples of the epoxy resin (a3) include a bisphenol A epoxy resin, a bisphenol F epoxy resin, a phenol novolac epoxy resin, a cresol novolac epoxy resin, and an epoxy resin in which the aromatic rings of a bisphenol epoxy resin are hydrogenated.

The weight per epoxy equivalent of the epoxy resin (a3) is preferably 150 to 1,000, more preferably 150 to 700, because a good coating property can be provided. Among the epoxy resins, bisphenol epoxy resins are preferable because a cured coating film that is well-balanced between hardness and ductility can be formed.

As another epoxy (meth)acrylate, for example, an epoxy acrylate may be used that is produced by allowing a glycidyl ether epoxy compound to react with (meth)acrylic acid. Such a glycidyl ether epoxy compound may be, for example, bisphenol A or an alkylene oxide adduct of bisphenol A diglycidyl ether, bisphenol F or an alkylene oxide adduct of bisphenol F diglycidyl ether, hydrogenated bisphenol A or an alkylene oxide adduct of hydrogenated bisphenol A diglycidyl ether, hydrogenated bisphenol F or an alkylene oxide adduct of hydrogenated bisphenol F diglycidyl ether, ethylene glycol diglycidyl ether, propylene glycol diglycidyl ether, or neopentyl glycol diglycidyl ether. One or more active-energy-ray-curable oligomers of such epoxy (meth)acrylates can be used.

A branched epoxy (meth)acrylate (E1) is preferably used that includes at least one of structural units represented by formulae (11) and (12),

[Chem. 16]

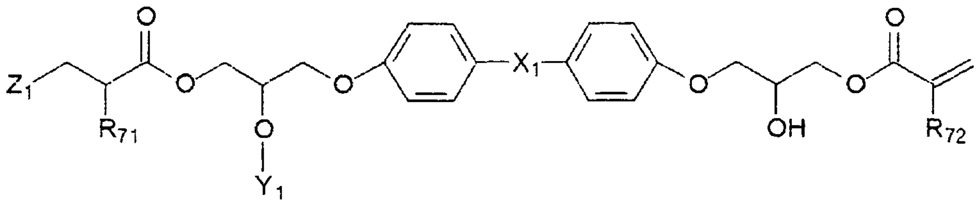

(11)

[Chem. 17]

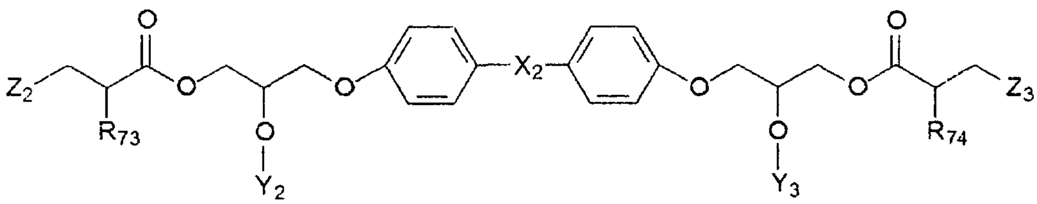

(12)

(in the formulae (11) and (12), $X_1$ and $X_2$ each independently represent $-SO_2-$, $-CH_2-$, $-CH(CH_3)-$, or $-C(CH_3)_2-$; $R_{71}$ to $R_{74}$ each independently represent a hydrogen atom or a methyl group),
and structural units represented by formulae (13) and (14),
**[0074]**

[Chem. 18]

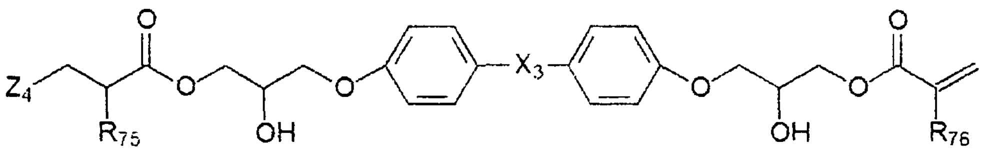

(13)

(in the formula (13), $X_3$ represents $-SO_2-$, $-CH_2-$, $-CH(CH_3)-$, or $-C(CH_3)_2-$; $R_{75}$ and $R_{76}$ each independently represent a hydrogen atom or a methyl group),
**[0075]**

[Chem. 19]

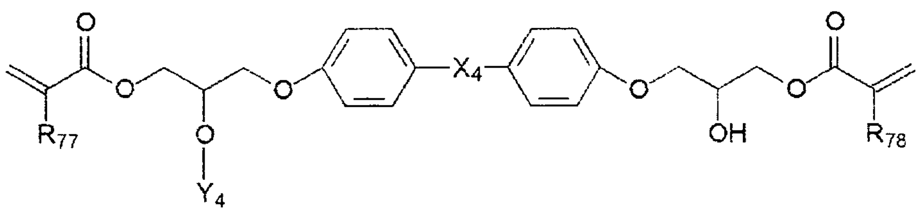

(14)

(in the formula (14), $X_4$ represents $-SO_2-$, $-CH_2-$, $-CH(CH_3)-$, or $-C(CH_3)_2-$; $R_{77}$ and $R_{78}$ each independently represent a hydrogen atom or a methyl group),
where $Y_1$ in a structural unit represented by the formula (11) is bonded to any one of $Z_1$ to $Z_3$ of other structural units represented by the formulae (11) and (12) or $Z_4$ in the formula (13),
$Y_2$ and $Y_3$ in a structural unit represented by the formula (12) represent a hydrogen atom, or are bonded to any one of $Z_1$ to $Z_3$ of other structural units represented by the formulae (11) and (12) or $Z_4$ in the formula (14), and
$Z_1$ to $Z_3$ in structural units represented by the formulae (11) and (12) are bonded to any one of $Y_1$ to $Y_3$ of other structural units represented by the formulae (11) and (12) or $Y_4$ in the formula (14).
In the branched epoxy (meth)acrylate (E1), a branched epoxy (meth)acrylate (E1) in which $X_1$ to $X_4$ represent

- $C(CH_3)_2$- and $R_{71}$ to $R_{78}$ represent a hydrogen atom is preferred because it can be produced at a low cost and it facilitates reaction control.

The branched epoxy (meth)acrylate (E1) may be used as an epoxy (meth)acrylate mixture with an epoxy (meth)acrylate (E2) represented by a formula (15)

[Chem. 20]

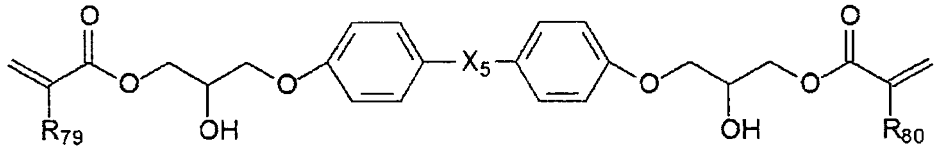

(15)

(in the formula (15), $X_5$ represents -$SO_2$-, -$CH_2$-, -$CH(CH_3)$-, or -$C(CH_3)_2$-; $R_{79}$ and $R_{80}$ each independently represent a hydrogen atom or a methyl group). In the production of the branched epoxy (meth)acrylate (E1), the epoxy (meth) acrylate (E2) represented by the formula (15) is normally generated and hence use of a mixture of (E1) and (E2) is advantageous in the production procedures.

In the branched epoxy (meth)acrylate (E1), a branched epoxy (meth)acrylate represented by a formula (16) is preferable because it facilitates reaction control.

[Chem. 21]

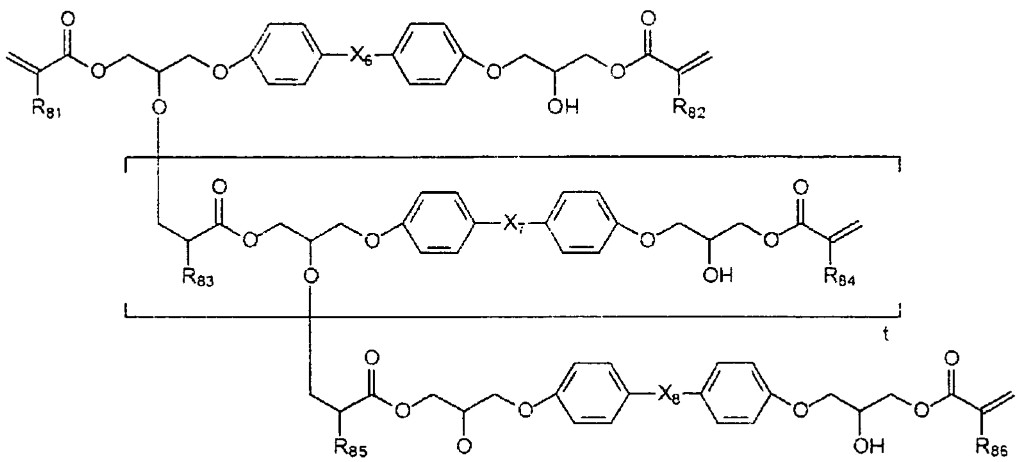

(16)

(in the formula (16), $X_6$ to $X_8$ each independently represent - $SO_2$-, -$CH_2$-, -$CH(CH_3)$-, or -$C(CH_3)_2$-; $R_{81}$ to $R_{86}$ each independently represent a hydrogen atom or a methyl group; and t represents 0 to 20.) In particular, a branched epoxy (meth)acrylate in which $X_6$ to $X_8$ represent -$C(CH_3)_2$- and $R_{81}$, to $R_{86}$ represent a hydrogen atom is preferred because it can be produced at a low cost and it facilitates reaction control.

The branched epoxy (meth)acrylate (E1) is **characterized in that** it has a large number of branched moieties in the molecular skeleton and hence the structure of a coating film having been cured with ultraviolet rays has a high crosslinking density; in particular, since it intramolecularly has a phenyl skeleton, it has a rigid molecular skeleton due to the phenyl skeleton; thus, even when it is designed such that the content of an acryloyl group is made low and the occurrence of the crosslinking reaction due to ultraviolet curing is reduced, a coating film can be designed to have a high hardness. Specifically, distortion in the cured film due to curing contraction caused in ultraviolet curing can be relieved. As a result, an optical-disc coating material that forms a coating film having a high elastic modulus and causes less warpage even when the thickness of the coating film is designed to be large can be achieved. Such a material is optimal for applications of an optical disc in which recording and reproduction of signals are performed with a blue laser beam, the optical disc requiring very thick light transmitting layer among optical discs.

When the branched epoxy (meth)acrylate (E1) is synthesized, it is normally obtained as a mixture of the branched epoxy (meth)acrylate (E1) in which a structural unit represented by the formula (11) or (12) is repeated 1 to 100 times and an epoxy (meth)acrylate represented by the formula (15). When the mixture is analyzed by, for example, gel permeation chromatography, a distribution of compounds whose n represents various values can be observed. Accordingly, when an ultraviolet curable composition according to the present invention is prepared, it is convenient to use the mixture. When such a mixture is used, a mixture is preferably used in which the content of a branched epoxy (meth)acrylate having a structural unit repeated 1 to 100 times is 30 mass% or more, more preferably 35 mass% or more.

In the present invention, the weight-average molecular weight (Mw) of the branched epoxy (meth)acrylate (EA1) determined from results obtained by measuring the mixture of the branched epoxy (meth)acrylate (EA1) and the epoxy (meth)acrylate represented by the formula (10) by gel permeation chromatography (GPC), is preferably 1,000 to 10,000, more preferably 1,500 to 8,000, still more preferably 2,000 to 6,000. When the molecular weight of the branched epoxy (meth)acrylate (EA1) is made be in such a range, an excessively high viscosity can be avoided and the content of the branched epoxy (meth)acrylate (EA1) contained as an essential component in an ultraviolet curable composition according to the present invention can be made high. The ratio of the branched epoxy (meth)acrylate (EA1) to the epoxy (meth)acrylate (EA2) in the mixture in terms of area ratio in a chromatogram measured by the GPC is preferably as follows: the branched epoxy (meth)acrylate (EA1)/the epoxy (meth)acrylate (EA2) = 10/1 to 1/2, more preferably 5/1 to 1/1, still more preferably 3/1 to 3/2.

The weight-average molecular weight by GPC can be determined by, for example, measurement of the molecular weight in terms of polystyrene standards in which an HLC-8220 manufactured by Tosoh Corporation, four columns of Super HZM-M, THF serving as a solvent are used; the flow rate is 1.0 ml/min; the column temperature is 40°C; and the detector temperature is 30°C.

When the branched epoxy (meth)acrylate (E1) is used, the content of the branched epoxy (meth)acrylate (E1) with respect to the total amount of the radical-polymerizable compound contained in the ultraviolet curable composition is preferably 10 to 80 mass%, more preferably 20 to 70 mass%.

In the present invention, as an acrylate oligomer, a urethane (meth)acrylate may be used. Examples of such a urethane (meth)acrylate include polyurethane (meth)acrylates such as a urethane (meth)acrylate having a polyether skeleton, a urethane (meth)acrylate having a polyester skeleton, and a urethane (meth)acrylate having a polycarbonate skeleton.

In particular, a urethane (meth)acrylate (U1) is preferably used that is produced from a compound intramolecularly having three or more hydroxyl groups, a compound intramolecularly having two or more isocyanate groups, and a compound having a hydroxyl group and a (meth)acryloyl group. Use of the urethane (meth)acrylate (U1) can impart flexibility to a cured film so that warpage due to change in the heat and humidity environment is less likely to be caused. The urethane bonds of such a urethane (meth)acrylate enhance a cohesion property and cohesive failure is less likely to be caused. Thus, the resultant cured product has appropriate adhesion.

Examples of the compound having three or more hydroxyl groups include trimethylolpropane, ditrimethylolpropane, pentaerythritol, dipentaerythritol, glycerin, polyglycerin; alkylene oxide (such as ethylene oxide, propylene oxide, 1,2-butylene oxide, 1,3-butylene oxide, or 2,3-butylene oxide) adducts of the foregoing; and lactone (such as ε-caprolactone) adducts of the foregoing.

Examples of the compound intramolecularly having two or more isocyanate groups include polyisocyanates such as tetramethylene diisocyanate, hexamethylene diisocyanate, trimethylhexamethylene diisocyanate, bis(isocyanatemethyl)cyclohexane, cyclohexane diisocyanate, bis(isocyanatecyclohexyl)methane, isophorone diisocyanate, tolylene diisocyanate, xylylene diisocyanate, diphenylmethane diisocyanate, m-phenylene diisocyanate, and norbornene diisocyanate. Of these, diisocyanate compounds intramolecularly having two isocyanate groups are preferably used. In particular, isophorone diisocyanate is preferable because it does not suffer from deterioration of hue or degradation of light-beam transmittance.

Examples of the compound having a hydroxyl group and a (meth)acryloyl group include hydroxyethyl (meth)acrylate, hydroxypropyl (meth)acrylate, hydroxybutyl (meth)acrylate, hydroxycaprolactone (meth)acrylate, and compounds produced by allowing such a (meth)acrylate to react with a compound having two or more hydroxyl groups. The examples further include compounds produced by allowing a compound having two or more hydroxyl groups to react with (meth) acrylic acid: for example, addition reaction products between a glycidyl ether compound and (meth)acrylic acid, mono (meth)acrylates of glycol compounds.

The weight-average molecular weight (Mw) of the urethane (meth)acrylate (U1) measured by gel permeation chromatography (GPC) is preferably 1,000 to 20,000, more preferably 1,500 to 15,000. In such a case, an optical disc produced with an ultraviolet curable composition according to the present invention has high durability and high light resistance. In the GPC, an HLC-8020 manufactured by Tosoh Corporation, columns of GMHxl-GMHxl-G200Hxl-G1000Hxlw, THF serving as a solvent are used; the flow rate is 1.0 ml/min; the column temperature is 40°C; the detector temperature is 30°C; and the molecular weight is measured in terms of polystyrene standards.

When the urethane (meth)acrylate (U1) is used, the content thereof in the radical polymerizable compound contained in the ultraviolet curable composition is preferably 40 mass% or less, particularly preferably 30 mass% or less. By making the content of the urethane (meth)acrylate (U1) be in such a range, appropriate flexibility can be imparted to a cured film and, in particular, a cured film that is less likely to warp under change in the heat and humidity environment

can be achieved.

[(Meth)acrylate monomer]

In the present invention, in addition to the components (a) and (b), another (meth)acrylate monomer may be used in combination. The (meth)acrylate monomer is not particularly limited: a (meth)acrylate monomer having a single (meth)acryloyl group in a single molecule (hereafter, referred to as a monofunctional (meth)acrylate), a (meth)acrylate monomer having two (meth)acryloyl groups in a single molecule (hereafter, referred to as a bifunctional (meth)acrylate), and a (meth)acrylate monomer having three or more (meth)acryloyl groups in a single molecule (hereafter, referred to as a polyfunctional (meth)acrylate monomer) can be used; and, by appropriately mixing such monomers, a composition that has a desired viscosity and provides a desired elastic modulus after curing can be obtained.

Examples of the monofunctional (meth)acrylate include acryloylmorpholine, isobornyl (meth)acrylate, norbornyl (meth)acrylate, and 2-(meth)acryloyloxymethyl-2-methylbicycloheptaneadamantyl (meth)acrylate.

Examples of the bifunctional (meth)acrylate include 1,4-butanediol di(meth)acrylate, 3-methyl-1,5-pentanediol di(meth)acrylate, 1,6-hexanediol di(meth)acrylate, neopentyl glycol di(meth)acrylate, 2-methyl-1,8-octanediol di(meth) acrylate, 2-butyl-2-ethyl-1,3-propanediol di(meth)acrylate, ethylene glycol di(meth)acrylate, trimethylolpropane di(meth) acrylate, pentaerythritol di(meth)acrylate, polypropylene glycol di(meth)acrylate, di(meth)acrylate of a diol that is obtained by adding 4 mol or more of ethylene oxide or propylene oxide to 1 mol of neopentyl glycol, ethylene-oxide-modified phosphate (meth)acrylate, ethylene-oxide-modified alkylated phosphate di(meth)acrylate, diethylene glycol di(meth) acrylate, dipropylene glycol di(meth)acrylate, tripropylene glycol di(meth)acrylate, polyether (meth)acrylate, and diethylaminoethyl (meth)acrylate; as for (meth)acrylates having an alicyclic moiety, examples of an alicyclic bifunctional (meth) acrylate include norbornanedimethanol di(meth)acrylate, norbornanediethanol di(meth)acrylate, di(meth)acrylate of a diol obtained by adding 2 mol of ethylene oxide or propylene oxide to norbornanedimethanol, tricyclodecanedimethanol di(meth)acrylate, tricyclodecanediethanol di(meth)acrylate, di(meth)acrylate of a diol obtained by adding 2 mol of ethylene oxide or propylene oxide to tricyclodecanedimethanol, pentacyclopentadecanedimethanol di(meth)acrylate, pentacyclopentadecanediethanol di(meth)acrylate, di(meth)acrylate of a diol obtained by adding 2 mol of ethylene oxide or propylene oxide to pentacyclopentadecanedimethanol, di(meth)acrylate of a diol obtained by adding 2 mol of ethylene oxide or propylene oxide to pentacyclopentadecanediethanol, dimethyloldicyclopentane di(meth)acrylate, hydroxypivalaldehyde-modified trimethylolpropane di(meth)acrylate, hydroxypivalic acid neopentyl glycol di(meth)acrylate, ethylene-oxide-modified bisphenol A di(meth)acrylate, and propylene-oxide-modified bisphenol A di(meth)acrylate.

Of these, tricyclodecanedimethanol di(meth)acrylate, tripropylene glycol di(meth)acrylate, hydroxypivalic acid neopentyl glycol di(meth)acrylate, ethylene-oxide-modified bisphenol A di(meth)acrylate, are preferable; and, in particular, hydroxypivalic acid neopentyl glycol di(meth)acrylate and ethylene-oxide-modified bisphenol A di(meth)acrylate are preferable.

To adjust an elastic modulus after curing to be high, a (meth)acrylate having a functionality of three or more may be used. Examples of such a (meth)acrylate include bis(2-acryloyloxyethyl) hydroxyethyl isocyanurate, bis(2-acryloyloxypropyl) hydroxypropyl isocyanurate, bis(2-acryloyloxybutyl) hydroxybutyl isocyanurate, bis(2-methacryloyloxyethyl) hydroxyethyl isocyanurate, bis(2-methacryloyloxypropyl) hydroxypropyl isocyanurate, bis(2-methacryloyloxybutyl) hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate, and tris (2-methacryloyloxybutyl) isocyanurate.

If necessary, a radical polymerizable compound such as N-vinylpyrrolidone, N-vinylcaprolactam, a vinyl ether monomer, or a phosphate-group-containing (meth)acrylate may also be used.

The concentration of an acryloyl group contained in an ultraviolet curable composition according to the present invention is preferably 4.00 mmol/g or less, preferably in the range of 2.9 to 3.4 mmol/g, particularly preferably in the range of 2.9 to 3.2 mmol/g because warpage of a cured film tends to be reduced.

In the present invention, an acrylate oligomer and an acrylate monomer are preferably used as the (meth)acrylate oligomer and the (meth)acrylate monomer because good curability is exhibited in UV radiation and an appropriate cured film tends to be provided. When a methacrylate oligomer and a methacrylate monomer are used, the content of the methacrylate components in the radical polymerizable compound contained in the ultraviolet curable composition is preferably 20 mass% or less, particularly preferably 10 mass% or less because good curability is exhibited in UV radiation.

[Initiators and additives]

An ultraviolet curable composition for an optical disc, the ultraviolet curable composition being used for a light transmitting layer, may contain a publicly known photopolymerization initiator, a publicly known thermal polymerization initiator, in addition to the (meth)acrylate oligomer and the (meth)acrylate monomer.

Examples of usable photopolymerization initiators include molecular-cleavage-type photopolymerization initiators such as benzoin isobutyl ether, benzil, 1-hydroxycyclohexylphenyl ketone, benzoin ethyl ether, benzyl dimethyl ketal, 2-hydroxy-2-methyl-1-phenylpropane-1-one, 1-(4-isopropylphenyl)-2-hydroxy-2-methylpropane-1-one, 2-methyl-1-(4-methylthiophenyl)-2-morpholinopropane-1-one, 2-hydroxy-1-{4-[4-(2-hydroxy-2-methyl-propionyl)-benzyl]-phenyl}-2-methyl-propane-1-one, 1-[4-(2-hydroxyethoxy)-phenyl]-2-hydroxy-2-methyl-1-propane-1-one, phenylglyoxylic acid methyl ester, and 2,4,6-trimethylbenzoyldiphenylphosphine oxide; and hydrogen-extraction-type photopolymerization initiators such as benzophenone, 4-phenylbenzophenone, isophthalphenone, 4-benzoyl-4'-methyl-diphenylsulfide, 2,4-diethylthioxanthone, and 2-isopropylthioxanthone.

If necessary, the ultraviolet curable composition used for the light transmitting layer may contain, as additives, a surfactant, a leveling agent, a thermal polymerization inhibitor, an antioxidant such as hindered phenol or phosphite, and a light stabilizer such as hindered amine. Examples of a sensitizing agent that can be used include trimethylamine, methyldimethanolamine, triethanolamine, p-dimethylaminoacetophenone, ethyl p-dimethylamino benzoate, isoamyl p-dimethylamino benzoate, N,N-dimethylbenzylamine, and 4,4'-bis(diethylamino)benzophenone; furthermore, an amine that does not cause addition reaction with the above-described photopolymerizable compound can also be used in combination.

As for the ultraviolet curable composition used for the light transmitting layer, by adjusting the radical polymerizable compound so as to have a viscosity of 500 to 5,000 mPa·s, preferably 1,000 to 3,000 mPa·s, more preferably 1,500 to 2,500 mPa·s, a light transmitting layer having a large thickness can be appropriately formed.

An ultraviolet curable composition according to the present invention preferably provides a cured film having a glass transition temperature of 50°C or less, more preferably 40°C or less. When such a temperature range is satisfied, recovery from signal errors can be appropriately achieved before and after a load test.

[Optical disc]

An optical disc according to the present invention is an optical disc in which at least a light reflecting layer and a light transmitting layer are formed on a substrate; recording or reproduction is performed with a laser beam incident on the light transmitting layer; and the light transmitting layer includes a cured product of the ultraviolet curable composition. In an optical disc according to the present invention, by using the ultraviolet curable composition for a light transmitting layer, warpage is less likely to be caused; recovery from deformation even due to a load for a long period of time is rapidly achieved and hence errors of reproduced signals are less likely to increase and recovery from the errors is achieved over time; and, as a result, signal reproduction can be appropriately achieved.

[Light transmitting layer]

A light transmitting layer formed of an ultraviolet-cured product of the ultraviolet curable composition preferably has an elastic modulus (25°C) of 1,500 MPa or less, more preferably 50 to 1,300 MPa, still more preferably 50 to 900 MPa, most preferably 50 to 700 MPa, the elastic modulus being measured by indenting a Vickers indenter having a vertex angle of 136° under a load of 100 mN into the light transmitting layer. By making the light transmitting layer have an elastic modulus within such a range, the light transmitting layer is less likely to warp and recovery from deformation even due to a load for a long period of time tends to be achieved. Thus, recording and reproduction of information can be appropriately performed. When the light transmitting layer has an excessively low elastic modulus, the surface of the light transmitting layer tends to be scratched, which is problematic. When the light transmitting layer has an excessively high elastic modulus, the optical disc considerably warps, which is problematic.

An elastic modulus can be measured with a Vickers indenter in accordance with ISO standards ISO14577. An elastic modulus measured by indenting a Vickers indenter having a vertex angle of 136° in accordance with ISO14577 is represented as an indentation elastic modulus $E_{IT}$. A plastic deformation percentage is represented as an indentation creep $C_{IT}$ and calculated with the following formula.

$$C_{IT} = \frac{h2 - h1}{h1} \times 100$$

where h1 represents an indentation depth at the time when the load has reached 100 mN and h2 represents an indentation depth at the time when the load has been maintained for 60 seconds after it reaches 100 mN.

As a measurement device that complies with ISO14577, a FISCHERSCOPE HM2000 manufactured by Fischer Instruments K.K. can be used to perform the measurement.

A light transmitting layer used in the present invention preferably has a plastic deformation percentage of 70% or less at the time when a Vickers indenter having a vertex angle of 136° is indented therein under a load of 100 mN and the load has been maintained for 60 seconds, more preferably 60% or less. When the plastic deformation percentage

is made in such a range, recovery from deformation caused by a load for a long period of time tends to be achieved over time.

In an optical disc according to the present invention, a light transmitting layer is used that has a loss modulus (E'') of 10 MPa or less at 60°C in a dynamic viscoelastic spectrum measured at a frequency of 3.5 Hz, preferably 0.1 to 7 MPa, more preferably 1 to 7 MPa. When the loss modulus at 60°C is made in such a range, errors of reproduced signals are less likely to increase even under a load for a long period of time and recovery from the errors is achieved over time so that signal reproduction can be appropriately achieved.

As for the measurement of a dynamic viscoelastic spectrum, the light transmitting layer is blanked with a dumbbell cutter into a specimen having the shape of Specimen No. 5 according to JIS K 7127. Such a specimen is measured with a dynamic visco-elastometer RSA-II (frequency: 3.5 Hz, temperature increase rate: 3°C/min) manufactured by Rheometric Scientific, Inc.

In an optical disc according to the present invention, a loss tangent (tanδ) at 60°C in the thus-measured dynamic viscoelastic spectrum is preferably 0.25 or less, particularly preferably 0.01 to 0.20 or less. When the loss tangent at 60°C is in such a range, errors of reproduced signals are less likely to increase even under a load for a long period of time and recovery from the errors is achieved over time so that signal reproduction can be appropriately achieved.

A light transmitting layer in an optical disc according to the present invention preferably transmit therethrough a blue laser beam having a lasing wavelength of 370 to 430 nm efficiently. In the light transmitting layer having a thickness of 100 μm, the transmittance of 405 nm light is preferably 85% or more, particularly preferably 90% or more.

A light transmitting layer in an optical disc according to the present invention preferably has a thickness of 70 to 110 μm, particularly preferably 90 to 110 μm. In the present invention, a light transmitting layer that has the specific indentation elastic modulus, the specific loss modulus, and such a thickness is applied to an optical disc. As a result, warpage of the optical disc can be suppressed; plastic deformation is also less likely to be caused even under a load from the outside of the optical disc for a long period of time or as a result of an impact due to falling and, even when the optical disc is deformed, the optical disc tends to recover from the deformation in a short period of time. Accordingly, the optical disc particularly becomes excellent in an impact buffer property and a deformation recovery property under an impact or pressure from the outside of the optical disc and hence the stability of reading signals from the optical disc can be further enhanced. Although the thickness of the light transmitting layer is normally set at about 100 μm, since the thickness considerably influences light transmittance, reading of signals, and recording, the thickness needs to be sufficiently controlled. The light transmitting layer may be constituted by a single cured layer having such a thickness or a stack of a plurality of layers.

[Substrate]

A substrate used for an optical disc according to the present invention may be a disc-shaped circular resin substrate. The resin is preferably polycarbonate. When an optical disc is for reproduction only, pits responsible for information recording are formed in a surface of a substrate on which a light reflecting layer is to be stacked. In the case of a Blu-ray disc from which information is read with a blue laser beam having a lasing wavelength of 370 to 430 nm, a substrate having a thickness of about 1.1 mm can be used.

[Light reflecting layer]

A light reflecting layer used for an optical disc according to the present invention should be a layer that can reflect a laser beam and form an optical disc allowing for recording and reproduction. The light reflecting layer may be formed of, for example, a metal such as gold, copper, or aluminum; an alloy of the foregoing; or an inorganic compound of silicon. In particular, silver or an alloy mainly containing silver is preferably used because of a high reflectivity of light having a wavelength close to 400 nm. The light reflecting layer preferably has a thickness of about 10 to 60 nm.

[Configuration of optical disc]

Optical discs according to the present invention include discs for reproduction only and discs allowing for recording and reproduction. Such a disc for reproduction only can be produced in the following manner: pits serving as an information recording layer are formed in injection molding of a single circular resin substrate; a light reflecting layer is then formed on the information recording layer; an ultraviolet curable composition is subsequently applied to the light reflecting layer by a spin-coating method; and the ultraviolet curable composition is then cured by irradiation with ultraviolet rays to form a light transmitting layer. Such a disc allowing for recording and reproduction can be produced in the following manner: a light reflecting layer is formed on a single circular resin substrate; an information recording layer constituted by a phase change film, a magneto-optical recording film, or the like is then formed; an ultraviolet curable composition is subsequently applied to the light reflecting layer by a spin-coating method or the like; and the ultraviolet curable

composition is then cured by irradiation with ultraviolet rays to form a light transmitting layer.

When an ultraviolet curable composition applied to the light reflecting layer is cured by irradiation with ultraviolet rays, for example, a continuous light radiation process employing a metal halide lamp, a high-pressure mercury-vapor lamp, or the like may be performed or a flash radiation process described in USP5904795 may be performed. The flash radiation process is preferred because curing can be efficiently achieved.

When ultraviolet rays are radiated, this radiation is preferably controlled such that a cumulative amount of light becomes 0.05 to 1 $J/cm^2$. The cumulative amount of light is more preferably 0.05 to 0.8 $J/cm^2$, particularly preferably 0.05 to 0.6 $J/cm^2$. An ultraviolet curable composition used for an optical disc according to the present invention is sufficiently cured even with a low cumulative amount of light; tucks are not generated in the end surface or the surface of the optical disc; and the optical disc does not warp or distort.

In the case of a writable optical disc, an information recording layer is disposed between a light reflecting layer and a light transmitting layer. The information recording layer should be a layer in which information can be recorded and from which information can be reproduced, and may be any one of a phase change recording layer, a magneto-optical recording layer, and an organic coloring matter recording layer.

When the information recording layer is a phase change recording layer, the information recording layer is normally constituted by a dielectric layer and a phase change film. The dielectric layer is required to have a function of buffering heat generated in the phase change layer and a function of adjusting the reflectivity of the disc, and is composed of a mixture of ZnS and $SiO_2$. The phase change film is configured to produce a difference in reflectivity between an amorphous state and a crystalline state due to phase change of the film, and may be composed of a Ge-Sb-Te alloy, a Sb-Te alloy, or a Ag-In-Sb-Te alloy.

In an optical disc according to the present invention, two or more information recording regions may be formed. For example, an optical disc for reproduction only may have a configuration in which a first light reflecting layer and a first light transmitting layer are stacked on a substrate having pits; a second light reflecting layer and a second light transmitting layer are formed on the first light transmitting layer or another layer stacked on the first light transmitting layer. In this case, pits are formed in the first light transmitting layer or the other layer stacked on the first light transmitting layer. Although an optical disc allowing for recording and reproduction has a configuration in which an information recording layer, a light reflecting layer, and a light transmitting layer are stacked on a substrate, it may have a configuration having two information recording layers by further forming a second light reflecting layer, a second information recording layer, and a second light transmitting layer on the light transmitting layer; or it may have a configuration having three or more information recording layers by similarly stacking layers. When a plurality of layers are stacked, the total thickness of the layers should be appropriately adjusted to be the above-described thickness.

In an optical disc according to the present invention, although a light transmitting layer may be the top layer, a hard coat layer may be further formed on the surface thereof. The hard coat layer preferably has a small film thickness, preferably 5 μm or less in view of warpage of the optical disc. In an optical disc according to the present invention, by forming a hard coat layer on a flexible light transmitting layer, an increase in signal errors caused by damage of the surface due to scratching or the like and an increase in signal errors caused by plastic deformation of the optical disc due to, for example, an external load for a long period of time can be appropriately suppressed, which is preferable.

In an optical disc according to the present invention, a signal error SER after a load is applied to the surface of a light transmitting layer is preferably $10^{-2}$ or less because the number of signal reproduction failures is small.

[Embodiments]

Hereinafter, as specific examples of an optical disc according to the present invention, examples of specific configurations of a monolayer-type optical disc and a bilayer-type optical disc will be described.

As a preferred embodiment of a monolayer-type optical disc among optical discs according to the present invention, for example, a configuration illustrated in Fig. 1 can be exemplified in which a light reflecting layer 2 and a light transmitting layer 3 are stacked on a substrate 1, and a blue laser beam is made incident from the light transmitting layer side to record or reproduce information. The irregularities in the figure schematically represent a recording track (groove). The light transmitting layer 3 is constituted by a cured product of an ultraviolet curable composition according to the present invention and has a thickness of 100 ± 10 μm. The substrate 1 has a thickness of about 1.1 mm. The light reflecting film is a thin film composed of silver or.

Fig. 2 illustrates a configuration in which a hard coat layer 4 is provided on the top layer of the configuration illustrated in Fig. 1. The hard coat layer preferably has a high hardness and high abrasion resistance. The hard coat layer preferably has a thickness of 1 to 5 μm, more preferably 3 to 5 μm.

As a preferred embodiment of a multilayer-type optical disc, for example, a configuration of a bilayer-type optical disc illustrated in Fig. 3 can be exemplified in which a light reflecting layer 5 and a light transmitting layer 6 are stacked on a substrate 1, a light reflecting layer 2 and a light transmitting layer 3 are further stacked thereon, and a blue laser beam is made incident from the light transmitting layer 3 side to record or reproduce information. The light transmitting

layer 3 and the light transmitting layer 6 are constituted by cured products of ultraviolet curable compositions and at least one of the layers is formed from an ultraviolet curable composition according to the present invention. As for the thickness of the layers, the total of the thickness of the light transmitting layer 3 and the thickness of the light transmitting layer 6 is 100 ± 10 μm. The substrate 1 has a thickness of about 1.1 mm. The light reflecting film is a thin film composed of silver or the like.

In a bilayer-type optical disc having such a configuration, a recording track (groove) is also formed in the surface of the light transmitting layer 6. Accordingly, the light transmitting layer 6 may be constituted by a plurality of layers in which a layer constituted by a cured film of an ultraviolet curable composition that appropriately forms a recording track is stacked on a layer constituted by a cured film of an ultraviolet curable composition that provides high adhesion. In this configuration, a hard coat layer may also be provided as the top layer.

Hereinafter, a method for producing the optical disc illustrated in Fig. 1 will be described.
A polycarbonate resin is first subjected to injection molding to produce the substrate 1 having a guide groove that is referred to as a recording track (groove) and is tracked by a laser beam. The light reflecting layer 2 is then formed by sputtering or vapor deposition of a silver alloy or the like on the recording track side surface of the substrate 1. An ultraviolet curable composition according to the present invention is applied to the light reflecting layer 2 and irradiated with ultraviolet rays from one side or both sides of the disc to cure the ultraviolet curable composition to thereby form the light transmitting layer 3. Thus, the optical disc in Fig. 1 is produced. In the case of the optical disc in Fig. 2, the hard coat layer 4 is further formed thereon by spin coating or the like.

Hereinafter, a method for producing the optical disc illustrated in Fig. 3 will be described.
A polycarbonate resin is first subjected to injection molding to produce the substrate 1 having a guide groove that is referred to as a recording track (groove) and is tracked by a laser beam. The light reflecting layer 6 is then formed by sputtering or vapor deposition of a silver alloy or the like on the recording track side surface of the substrate 1.

The light transmitting layer 5 formed from an ultraviolet curable composition according to the present invention or an ultraviolet curable composition is formed on the light reflecting layer 6. At this time, a recording track (groove) is imprinted in the surface of the light transmitting layer 5 with a mold. A step of imprinting the recording track (groove) is performed in the following manner. An ultraviolet curable composition is applied to the light reflecting layer 6 formed on the substrate 1. The mold for forming the recording track (groove) is bonded to the applied ultraviolet curable composition. Ultraviolet rays are radiated from one side or both sides of the bonded disc to cure the ultraviolet curable composition. After that, the mold is released and the light reflecting layer 2 is formed by sputtering or vapor deposition of a silver alloy or the like on the recording track (groove) side surface of the light transmitting layer 5. An ultraviolet curable composition is applied to the light reflecting layer 2 and then irradiated with ultraviolet rays to cure the ultraviolet curable composition to thereby form the light transmitting layer 3. Thus, the optical disc in Fig. 3 can be produced. When phase change recording layers are used on the light reflecting layers, an optical disc can be produced in much the same manner as that described above.

## EXAMPLES

Hereinafter, the present invention will be described in detail with respect to Synthetic examples and Examples. However, the present invention is not limited to these Examples. The term "part" in the following Examples denotes "part by mass".

<Synthetic example 1>

In a flask equipped with a thermometer, a stirrer, and a reflux condenser, 230 g of caprolactone-modified β-hydroxyethyl acrylate (hydroxyl value = 244 mg/KOH, PLACCEL FA1-DDM, manufactured by DAICEL CHEMICAL INDUSTRIES, LTD.), 148 g of phthalic anhydride, and 0.1 g of hydroquinone serving as a polymerization inhibitor were placed; and the temperature of the resultant mixture was increased to 120°C over 2 hours under stirring. The mixture was maintained at 120°C for 10 hours. It was then confirmed that the mixture had an acid value of 148 mg/KOH and the temperature of the mixture was subsequently decreased to 80°C. The mixture was mixed with 189 g of a bisphenol A epoxy resin and 2.85 g of triphenyl phosphine. The temperature of the mixture was increased back to 120°C and the mixture was then maintained for 4 hours to provide a reaction mixture that was a transparent pale-yellow resin-like mixture (acid value = 0.7, butyl acetate-diluted viscosity (reaction mixture/butyl acetate = 70/30) = F - G, weight per epoxy equivalent = 10,200) containing an epoxy (meth)acrylate resin (EA1). Measurement results in terms of molecular-weight distribution by GPC showed that the epoxy acrylate resin (EA-1) had a number-average molecular weight (Mn) of 1,360 and a weight-average molecular weight (Mw) of 3,840.

<Synthetic example 2>

To a reaction vessel equipped with a stirrer, a rectifying column, a water separator, a condenser, a thermometer, and a nitrogen inlet tube, 91 parts of ethylene glycol and 318 parts of adipic acid were added and the temperature of the resultant mixture was increased to 140°C over an hour under stirring. The temperature was further increased to 230°C over 3 hours and the resultant mixture was allowed to react for 3 hours at 230°C. The resultant solution was cooled when the acid value was 221 KOHmg/g. After the solution was cooled to 100°C, the solution was mixed with 529 parts of EPICLON850 (bisphenol A epoxy resin, manufactured by Dainippon Ink and Chemicals, weight per epoxy equivalent: 188 g/eq) and 0.2 parts of triphenyl phosphine, and the resultant mixture was allowed to react at 120°C for 4 hours. The acid value was 7.5 KOHmg/g. Under air flow without the nitrogen inlet tube, the resultant solution was mixed with 99 parts of acrylic acid (98%), 0.5 parts of hydroquinone monomethylether, 1 part of triphenyl phosphine, and 258 parts of phenoxyethyl acrylate; and the resultant mixture was allowed to react at 110°C for 12 hours. A modified epoxy acrylate resin (EA-2) that was semisolid resin-like matter having an acid value of 1.7 KOHmg/g was obtained. The obtained modified epoxy acrylate was measured by GPC in terms of molecular weight and it was found to have a number-average molecular weight (Mn) of 2,000, a weight-average molecular weight (Mw) of 6,400, and a distribution (Mw/Mn) of 3.20.

Compositions mixed in accordance with formulations in Table 1 below (numerical values in the formulations in the table represent parts by mass) were heated for 3 hours at 60°C and melted to prepare ultraviolet curable compositions of Examples (Examples 1 to 3) and Comparative examples (Comparative examples 1 to 3). The resultant compositions were evaluated in the following manner and the results are described in Table 1.

<Measurement method of viscosity>

The ultraviolet curable compositions were measured in terms of viscosity at 25°C with a B-type viscometer (BM-type, manufactured by TOKYO KEIKI INC.).

<Production conditions of optical discs for evaluation>

Polycarbonate substrates having a diameter of 120 mm and a thickness of 1.1 mm were provided. In each substrate, a film having a thickness of 20 to 40 nm was formed on a surface by sputtering with a silver-alloy target GBD05 (alloy of silver serving as a main component and bismuth) manufactured by Kobelco Research Institute, Inc.; and a silicon nitride (SiNx) film having a thickness of 5 to 10 nm was formed on the opposite surface by sputtering. The compositions in Table 1 were applied to the silver-alloy reflecting films of the resultant substrates with a spin-coating experimental coater. The compositions were irradiated with 2 shots of ultraviolet rays for precuring and 20 shots of ultraviolet rays for curing with a xenon flash radiation apparatus (Model: FUV-201WJ02) manufactured by USHIO INC. to thereby cure the compositions. Hardcoat Daicure Clear HC-1 (manufactured by DIC Corporation) was applied to the cured films such that the applied films had a thickness of about 3 $\mu$m; and the films were cured with 10 shots with the radiation apparatus. Thus, test sample discs having a light transmitting layer with a thickness of 100 $\pm$ 5 $\mu$m were obtained.

<Measurement method of elastic modulus and plastic deformation percentage>

A Vickers indenter having a vertex angle of 136° was indented into the surface of the light transmitting layer of each sample disc obtained in the above-described manner in accordance with a load program in Fig. 5 with a FISCHERSCOPE HM2000Xyp (Fischer Instruments K.K.) to thereby measure loss modulus $E_{IT}$ and plastic deformation percentage $C_{IT1}$.

<Measurement method of dynamic viscoelastic spectrum>

The light transmitting layer was blanked with a dumbbell cutter into a specimen having the shape of Specimen No. 5 according to JIS K 7127. The obtained specimen was measured with a dynamic visco-elastometer RSA-II (frequency: 3.5 Hz, temperature increase rate: 3°C/min) manufactured by Rheometric Scientific, Inc. to thereby determine loss modulus and loss tangent at 60°C. The temperature of the peak of loss tangent in the dynamic viscoelastic spectrum was defined as glass transition temperature.

<Warpage evaluation>

Warp angle was measured with an argus blu manufactured by Dr. Schwab Inspection Technology GmbH. The warp angle was determined from the average value of radial tilts in a radial range from 55 to 56 mm. Each sample disc

was measured with an environmental test chamber "PR-2PK" (manufactured by ESPEC Corp.) in terms of warp angles before and after exposure (durability test) to a high-temperature high-humidity environment at 80°C at 85% RH for 240 hours; and variation in warp angle before and after the test was determined as disc warpage. Note that the warp angle before the durability test was a value measured when each composition was cured and left in an environment at 25°C at 45% RH for one day; and the warp angle after the durability test was a value measured when each sample disc was left in an environment at 80°C at 85% RH for 240 hours, then taken out from the environment, and left in an environment at 25°C at 45% RH for one day. Herein, when a warp angle is represented as a positive (+) value, it means that the disc warps to a side opposite to the composition-coated side; when a warp angle is represented as a negative (-) value, it means that the disc warps to the coated side.

<Measurement of error rate of optical discs>

A nonwoven fabric sheet for storing CDs was placed on the surface of the light transmitting layer of each sample disc; a 625 g weight (a load of 24.9 g/mm2 per unit area) was placed on the sheet in a radial range from 35 to 45 mm, and the load had been applied to the sample disc for 96 hours at 23°C at 50% RH. After that, the disc was taken out and immediately measured in terms of error rate Random SER with "BD MASTER" manufactured by PULSTEC INDUSTRIAL CO., LTD. Average values of Random SER immediately after the load test, 1 hour after the load test, and 4 hours after the load test were evaluated on the basis of the following grading system.

Excellent: less than $2 \times 10^{-4}$

Good: $2 \times 10^{-4}$ or more and less than $1 \times 10^{-2}$

Poor: $1 \times 10^{-2}$ or more

[Table 1]

| | Example 1 | Example 2 | Example 3 | Example 4 | Example 5 | Example 6 | Example 7 | Example 8 |
|---|---|---|---|---|---|---|---|---|
| EA-1 | 35 | 35 | 35 | 35 | 35 | 35 | 58 | |
| EA-2 | 22 | 22 | 22 | 22 | 22 | 22 | | 58 |
| EA-3 | | | | | | | | |
| TMP(3EO)TA | 15 | 20 | 26 | | | | 15 | 15 |
| TMP(6PO)TA | | | | 15 | | | | |
| PET3A | | | | | 15 | | | |
| PET4A | | | | | | 15 | | |
| TAEIC | | | | | | | | |
| HPNDA | | | | | | | | |
| PEA | 21 | 16 | | 26 | 11 | 11 | 16 | 16 |
| CBA | 5 | 5 | 15 | | 15 | 15 | 9 | 9 |
| TBA | | | | | | | | |
| IBXA | | | | | | | | |
| Irg184D | 2 | 2 | 2 | 2 | 2 | 2 | 2 | 2 |
| PM-2 | 0.01 | 0.01 | 0.01 | 0.01 | 0.01 | 0.01 | 0.01 | 0.01 |
| GA | 0.01 | 0.01 | 0.01 | 0.01 | 0.01 | 0.01 | 0.01 | 0.01 |
| total | 100.02 | 100.02 | 100.02 | 100.02 | 100.02 | 100.02 | 100.02 | 100.02 |

(continued)

| | Example 1 | Example 2 | Example 3 | Example 4 | Example 5 | Example 6 | Example 7 | Example 8 |
|---|---|---|---|---|---|---|---|---|
| Concentration of acryloyl group (mmpl/g) | 3.41 | 3.5 | 3.62 | 3.05 | 3.88 | 4.07 | 3.36 | 3.35 |
| Elastic modulus (MPa) | 420 | 660 | 380 | 580 | 640 | 620 | 433 | 127 |
| Plastic deformation percentage (%) | 54 | 59 | 41 | 67 | 47 | 57 | 46 | 8 |
| Tg | 38 | 39 | 35 | 34 | 38 | 35 | 42 | 31 |
| 60°C E" (MPa) | 1.2 | 2.4 | 1.7 | 0.5 | 6.3 | 6.8 | 2.6 | 1.0 |
| 60°C tanδ | 0.07 | 0.12 | 0.07 | 0.04 | 0.2 | 0.2 | 0.12 | 0.06 |
| Disc warpage | 0.15 | 0.06 | 0.23 | 0.38 | 0.23 | 0.19 | -0.28 | -0.20 |
| Error rate measurement result Before load test | $5.0 \times 10^{-5}$ | $9.0 \times 10^{-5}$ | $8.0 \times 10^{-5}$ | $9.0 \times 10^{-5}$ | $5.0 \times 10^{-5}$ | $5.0 \times 10^{-5}$ | $1.3 \times 10^{-5}$ | $1.4 \times 10^{-5}$ |
| Load test Immediately after | $5.0 \times 10^{-5}$ Excellent | $9.0 \times 10^{-5}$ Excellent | $7.0 \times 10^{-5}$ Excellent | $1.6 \times 10^{-3}$ Good | $8.7 \times 10^{-3}$ Good | $9.0 \times 10^{-3}$ Good | $1.6 \times 10^{-5}$ Excellent | $1.4 \times 10^{-5}$ Excellent |
| 1 hour after | $5.0 \times 10^{-5}$ Excellent | $9.0 \times 10^{-5}$ Excellent | $7.0 \times 10^{-5}$ Excellent | $2.2 \times 10^{-4}$ Good | $5.1 \times 10^{-3}$ Good | $6.9 \times 10^{-3}$ Good | $1.5 \times 10^{-5}$ Excellent | $1.4 \times 10^{-5}$ Excellent |
| 4 hours after | $5.0 \times 10^{-5}$ Excellent | $9.0 \times 10^{-5}$ Excellent | $7.0 \times 10^{-5}$ Excellent | $1.0 \times 10^{-4}$ Excellent | $3.3 \times 10^{-3}$ Good | $4.6 \times 10^{-3}$ Good | $1.4 \times 10^{-5}$ Excellent | $1.3 \times 10^{-5}$ Excellent |

[Table 2]

| | Comparative example 1 | Comparative example 2 | Comparative example 3 | Comparative example 4 | Comparative example 5 | Comparative example 6 | Comparative example 7 |
|---|---|---|---|---|---|---|---|
| EA-1 | 35 | 35 | 35 | 34 | 30 | 28 | |
| EA-2 | 22 | 22 | 22 | 20 | 22 | 20 | |
| EA-3 | | | | | | | 58 |
| TMP(3EO)TA | | | 26 | 26 | 30 | 38 | 15 |
| TMP(6PO)TA | | | | | | | |
| PET3A | | | | | | | |
| PET4A | | | | | | | |
| TAEIC | | 15 | | | | | |
| HPNDA | 15 | | | | | | |
| PEA | 21 | 11 | | | 10 | 6 | 16 |
| CBA | 5 | 15 | | | 6 | 6 | 9 |
| TBA | | | 15 | | | | |
| IBXA | | | | 18 | | | |
| Irg184D | 2 | 2 | 2 | 2 | 2 | 2 | 2 |
| PM-2 | 0.01 | 0.01 | 0.01 | 0.01 | 0.01 | 0.01 | 0.01 |
| GA | 0.01 | 0.01 | 0.01 | 0.01 | 0.01 | 0.01 | 0.01 |
| total | 100.02 | 100.02 | 100.02 | 100.02 | 100.02 | 100.02 | 100.02 |
| Concentration of acryloyl group (mmpl/g) | 3.32 | 3.43 | 3.96 | 3.61 | 3.83 | 4.11 | 4.54 |
| Elastic modulus (MPa) | 650 | 560 | 1989 | 2413 | 992 | 1360 | 3308 |
| Plastic deformation percentage (%) | 71 | 42 | 27 | 21 | 42 | 32 | 14 |

(continued)

| | Comparative example 1 | Comparative example 2 | Comparative example 3 | Comparative example 4 | Comparative example 5 | Comparative example 6 | Comparative example 7 |
|---|---|---|---|---|---|---|---|
| Tg | 39 | 39 | 63 | 69 | 53 | 58 | 85 |
| 60°C E" (MPa) | 1.1 | 3.3 | 110 | 171 | 27.6 | 66.7 | 243 |
| 60°C tanδ | 0.09 | 0.2 | 0.53 | 0.45 | 0.42 | 0.43 | 0.17 |
| Disc warpage | 0.09 | 0.37 | -0.75 | -0.54 | -0.60 | -0.71 | -1.55 |
| Error rate measurement result Before load test | $4.0 \times 10^{-5}$ | $8.0 \times 10^{-5}$ | $1.7 \times 10^{-5}$ | $1.0 \times 10^{-5}$ | $1.2 \times 10^{-5}$ | $1.1 \times 10^{-4}$ | $4.2 \times 10^{-5}$ |
| Load test Immediately after | $1.1 \times 10^{-2}$ Poor | $3.2 \times 10^{-2}$ Poor | $2.0 \times 10^{-3}$ Good | $9.0 \times 10^{-4}$ Good | $1.2 \times 10^{-2}$ Poor | $2.0 \times 10^{-2}$ Poor | $5.0 \times 10^{-5}$ Excellent |
| 1 hour after | $8.9 \times 10^{-4}$ Good | $1.6 \times 10^{-2}$ Poor | $1.1 \times 10^{-3}$ Good | $5.2 \times 10^{-4}$ Good | $1.2 \times 10^{-2}$ Poor | $1.8 \times 10^{-2}$ Poor | $4.9 \times 10^{-5}$ Excellent |
| 4 hours after | $9.0 \times 10^{-4}$ Good | $7.9 \times 10^{-3}$ Good | $5.6 \times 10^{-4}$ Good | $3.4 \times 10^{-4}$ Good | $9.0 \times 10^{-3}$ Good | $1.5 \times 10^{-2}$ Poor | $4.8 \times 10^{-5}$ Excellent |

Symbols in Table 1 are as follows.

EA-1: epoxy acrylate described in Synthetic example 1 (epoxy acrylate represented by the formula (6) where $A_2$ is represented by the formula (7), $B_2$ is represented by the formula (8), $D_1$ is represented by the formula (9); $E_2$ in the formula (7) represents $-C(CH_3)_2-$, $J_4$ in the formula (8) is represented by a formula (17),

[Chem. 22]

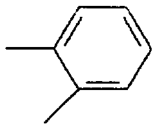

(17)

in the formula (9), $L_5$ represents $-(CH_2)_2-$, $L_6$ represents $-(CH_2)_5-$, and $k_1$ represents 1)

EA-2: epoxy acrylate described in Synthetic example 2 (epoxy acrylate represented by the formula (1) where $A_1$ is represented by the formula (2), $B_1$ is represented by the formula (3); $E_1$ in the formula (2) represents $-C(CH_3)_2-$, and, in the formula (3), $J_1$ represents $-(CH_2)_4-$ and $L_1$ represents $-(CH_2)_2-$)

EA-3: epoxy acrylate having a structure in which acrylic acid is directly added to glycidyl groups of a bisphenol A epoxy resin ("UNIDIC V-5530" manufactured by DIC Corporation)

TMP (3EO) TA: triacrylate of triol obtained by adding 3 mol of ethylene oxide to 1 mol of trimethylol propane

TMP (6PO) TA: triacrylate of triol obtained by adding 6 mol of propylene oxide to 1 mol of trimethylol propane

PET3A: pentaerythritol triacrylate

PET4A: pentaerythritol tetraacrylate

TAEIC: tris(acryloyloxyethyl) isocyanurate

HPNDA: hydroxypivalic acid neopentyl glycol diacrylate

PEA: phenoxyethyl acrylate (glass transition temperature of homopolymer: -22°C) (manufactured by Kyoeisha Chemical Co., Ltd.)

CBA: ethylcarbitol acrylate (glass transition temperature of homopolymer: -67°C) (manufactured by OSAKA ORGANIC CHEMICAL INDUSTRY LTD.)

TBA: tertiary-butyl acrylate (glass transition temperature of homopolymer: 41°C) (manufactured by OSAKA ORGANIC CHEMICAL INDUSTRY LTD.)

IBXA: isobornyl acrylate (glass transition temperature of homopolymer: 97°C) (manufactured by OSAKA ORGANIC CHEMICAL INDUSTRY LTD.)

Irg184D: 1-hydroxycyclohexylphenyl ketone

PM-2: ethylene-oxide-modified phosphate methacrylate (manufactured by Nippon Kayaku Co., Ltd.)

GA: gallic acid (manufactured by Dainippon Sumitomo Pharma Co., Ltd.)

Table 1. shows that the optical discs of Examples 1 to 8 in which compositions according to the present invention were used had low error rates immediately after, 1 hour after, and 4 hours after the load test and exhibited good signal characteristics. In contrast, the optical discs of Comparative examples 1, 2, 5, and 6 had high error rates immediately after, 1 hour after, and 4 hours after the load test and had problems in reproduction of signals. The optical discs of Comparative examples 3 to 7 had a warpage of more than 0.5° and had problems in terms of practicality. Brief Description of Drawings

[Fig. 1] Fig. 1 illustrates an example of a monolayer-type optical disc according to the present invention.

[Fig. 2] Fig. 2 illustrates an example of a monolayer-type optical disc according to the present invention.

[Fig. 3] Fig. 3 illustrates an example of a bilayer-type optical disc according to the present invention.

[Fig. 4] Fig. 4 illustrates a molecular-weight distribution of epoxy acrylate measured by GPC in Synthetic example 1.

[Fig. 5] Fig. 5 illustrates a load program diagram in a measurement of elastic modulus and plastic deformation percentage in Examples.

Reference Signs List

| | |
|---|---|
| 1 | substrate |
| 2 | light reflecting layer |

(continued)

| | |
|---|---|
| 3 | light transmitting layer of ultraviolet curable composition |
| 4 | hard coat layer |
| 5 | light reflecting layer |
| 6 | light transmitting layer of ultraviolet curable composition |

## Claims

**1.** An ultraviolet curable composition for an optical disc, the ultraviolet curable composition being used for a light transmitting layer of an optical disc in which at least a light reflecting layer and the light transmitting layer are stacked on a substrate, and information is reproduced by making a laser beam be incident on the optical disc from a side of the light transmitting layer, the ultraviolet curable composition comprising:

a radical polymerizable compound and a polymerization initiator, the radical polymerizable compound including a (meth)acrylate compound (a) that does not intramolecularly have a cyclic moiety and has a functionality of three or more and a monofunctional (meth)acrylate compound (b) that forms a homopolymer having a glass transition temperature of 20°C or less,
wherein a cured film of the ultraviolet curable composition has a glass transition temperature of 50°C or less,
a loss modulus (E'') at 60°C in a dynamic viscoelastic spectrum of the cured film of the ultraviolet curable composition measured at a frequency of 3.5 Hz is 10 MPa or less,
a loss tangent (tanδ) at 60°C in the dynamic viscoelastic spectrum of the cured film of the ultraviolet curable composition measured at a frequency of 3.5 Hz is 0.25 or less, and
an elastic modulus (25°C) measured by indenting a Vickers indenter having a vertex angle of 136° under a load of 100 mN into a surface of the cured film of the ultraviolet curable composition is 1,500 MPa or less.

**2.** The ultraviolet curable composition for an optical disc according to Claim 1, wherein the (meth)acrylate compound (a) that does not intramolecularly have a cyclic moiety and has a functionality of three or more is one or more compounds selected from a compound (a-1) represented by a formula (I)

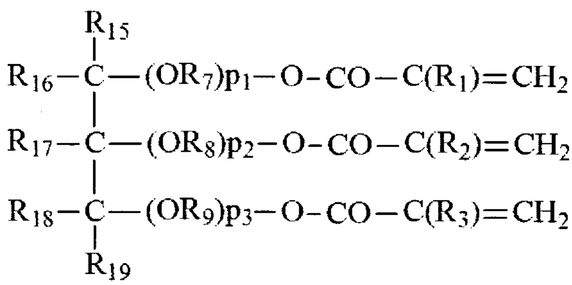

(I)

[where $R_1$ to $R_3$ each independently represent a hydrogen atom or a methyl group; $R_7$ to $R_9$ each independently represent - $CH(R_{13})$-$CH(R_{14})$- (where $R_{13}$ and $R_{14}$ each independently represent a hydrogen atom or an alkyl group having 1 to 5 carbon atoms) or $-(CH_2)_4-$; $p_1$ to $p_3$ each independently represent an integer of 0 to 10; and $R_{15}$ to $R_{19}$ each independently represent a hydrogen atom or an alkyl group having 1 to 10 carbon atoms.];
a compound (a-2) represented by a formula (II)

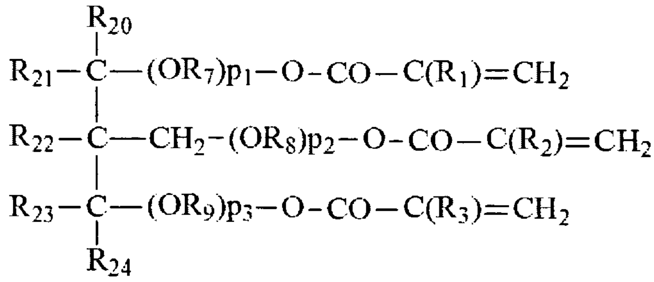

(II)

[where $R_1$ to $R_3$ each independently represent a hydrogen atom or a methyl group; $R_7$ to $R_9$ each independently represent - $CH(R_{13})$-$CH(R_{14})$- (where $R_{13}$ and $R_{14}$ each independently represent a hydrogen atom or an alkyl group having 1 to 5 carbon atoms) or -$(CH_2)_4$-; $p_1$ to $p_3$ each independently represent an integer of 0 to 10; and $R_{20}$ to $R_{24}$ each independently represent a hydrogen atom or an alkyl group having 1 to 10 carbon atoms.];
a compound (a-3) represented by a formula (III)

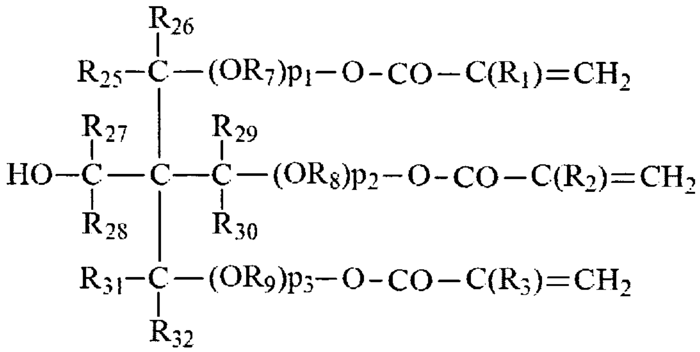

(III)

[where $R_1$ to $R_3$ each independently represent a hydrogen atom or a methyl group; $R_7$ to $R_9$ each independently represent - $CH(R_{13})$-$CH(R_{14})$- (where $R_{13}$ and $R_{14}$ each independently represent a hydrogen atom or an alkyl group having 1 to 5 carbon atoms) or -(CH2)4-; $p_1$ to $p_3$ each independently represent an integer of 0 to 10; and $R_{25}$ to $R_{32}$ each independently represent a hydrogen atom or an alkyl group having 1 to 10 carbon atoms.];
a compound (a-4) represented by a formula (IV)

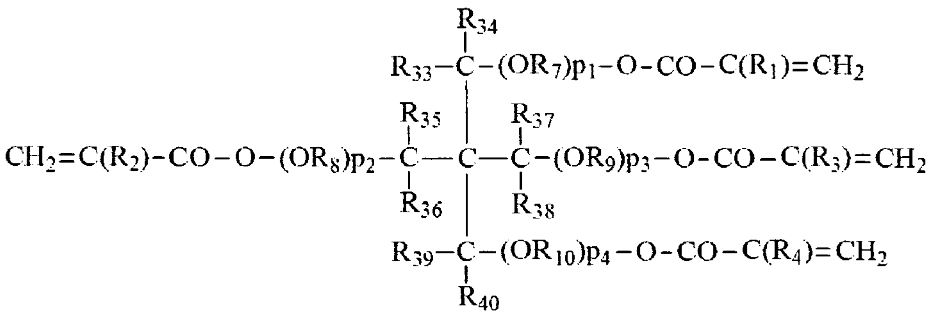

(IV)

[where $R_1$ to $R_4$ each independently represent a hydrogen atom or a methyl group; $R_7$ to $R_{10}$ each independently represent - $CH(R_{13})$-$CH(R_{14})$- (where $R_{13}$ and $R_{14}$ each independently represent a hydrogen atom or an alkyl group having 1 to 5 carbon atoms) or - $(CH_2)_4$-; $p_1$ to $p_4$ each independently represent an integer of 0 to 10; and $R_{33}$ to $R_{40}$ each independently represent a hydrogen atom or an alkyl group having 1 to 10 carbon atoms.]; and
a compound (a-5) represented by a formula (V)

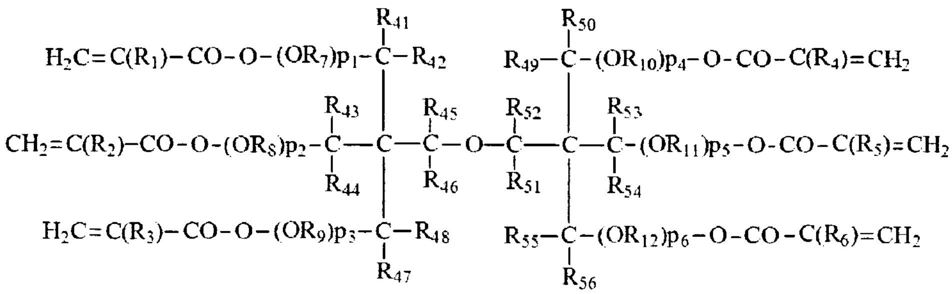

(V)

[where $R_1$ to $R_6$ each independently represent a hydrogen atom or a methyl group; $R_7$ to $R_{12}$ each independently represent - $CH(R_{13})$-$CH(R_{14})$- (where $R_{13}$ and $R_{14}$ each independently represent a hydrogen atom or an alkyl group having 1 to 5 carbon atoms) or -$(CH_2)_4$-; $p_1$ to $p_6$ each independently represent an integer of 0 to 10; and $R_{41}$ to $R_{56}$ each independently represent a hydrogen atom or an alkyl group having 1 to 10 carbon atoms.].

**3.** The ultraviolet curable composition for an optical disc according to Claim 1, wherein the (meth)acrylate compound (a) that does not intramolecularly have a cyclic moiety and has a functionality of three or more is tri(meth)acrylate of an ethylene oxide or propylene oxide adduct of trimethylol propane.

**4.** The ultraviolet curable composition for an optical disc according to any one of Claims 1 to 3, wherein the monofunctional (meth)acrylate compound (b) that forms a homopolymer having a glass transition temperature of 20°C or less is at least one of phenoxyethyl acrylate and ethylcarbitol acrylate.

**5.** The ultraviolet curable composition for an optical disc according to any one of Claims 1 to 4, comprising, as the radical polymerizable compound, an epoxy (meth)acrylate.

**6.** An optical disc wherein at least a light reflecting layer and a light transmitting layer that includes a cured film of an ultraviolet curable composition are stacked on a substrate; information is reproduced by making a blue laser beam be incident on the optical disc from a side of the light transmitting layer; and the ultraviolet curable composition is the ultraviolet curable composition for an optical disc according to any one of Claims 1 to 5.

**7.** The optical disc according to Claim 6, wherein the light transmitting layer has a thickness of 70 to 110 $\mu$m.

**8.** The optical disc according to Claim 6 or 7, wherein a top layer is a hard coat layer.

## Patentansprüche

**1.** Ultraviolett-härtbare Zusammensetzung für eine optische Platte, wobei die Ultraviolett-härtbare Zusammensetzung für eine lichtdurchlässige Schicht einer optischen Platte verwendet wird, in der wenigstens eine lichtreflektierende Schicht und die lichtdurchlässige Schicht auf einem Substrat gestapelt sind und Information reproduziert wird, indem ein Laserstrahl auf die optische Platte von einer Seite der lichtdurchlässigen Schicht einfallen gelassen wird, wobei die Ultraviolett-härtbare Zusammensetzung umfasst:

eine radikalisch polymerisierbare Verbindung und einen Polymerisationsinitiator, wobei die radikalisch polymerisierbare Verbindung eine (Meth)acrylat-Verbindung (a), die intramolekular keine cyclische Gruppierung hat und die eine Funktionalität von drei oder mehr hat, und eine monofunktionelle (Meth)acrylat-Verbindung (b), die ein Homopolymer bildet, das eine Glasübergangstemperatur von 20°C oder weniger hat, umfasst,
wobei ein gehärteter Film der Ultraviolett-härtbaren Zusammensetzung eine Glasübergangstemperatur von 50°C oder weniger hat,
der Verlustmodul (E") bei 60°C in einem dynamischen viskoelastischen Spektrum des gehärteten Films der Ultraviolett-härtbaren Zusammensetzung, gemessen bei einer Frequenz von 3,5 Hz, 10 MPa oder weniger ist,
der Tanges des Fehlwinkels (tan$\delta$) bei 60°C im dynamischen viskoelastischen Spektrum des gehärteten Films der Ultraviolett-härtbaren Zusammensetzung, gemessen bei einer Frequenz von 3,5 Hz, 0,25 oder weniger ist und
der Elastizitätsmodul (25°C), gemessen durch Eindringen eines Vickers-Eindringkörpers mit einem Vertex-Winkel von 136° unter einer Last von 100 mN in eine Oberfläche des gehärteten Films der Ultraviolett-härtbaren

Zusammensetzung, 1500 MPa oder weniger ist.

**2.** Ultraviolett-härtbare Zusammensetzung für eine optische Platte gemäß Anspruch 1, wobei die (Meth)acrylat-Verbindung (a), die intramolekular keine cyclische Gruppierung hat und eine Funktionalität von 3 oder mehr hat, eine Verbindung oder mehrere Verbindungen ist, die ausgewählt ist/sind aus einer Verbindung (a-1), dargestellt durch eine Formel (I)

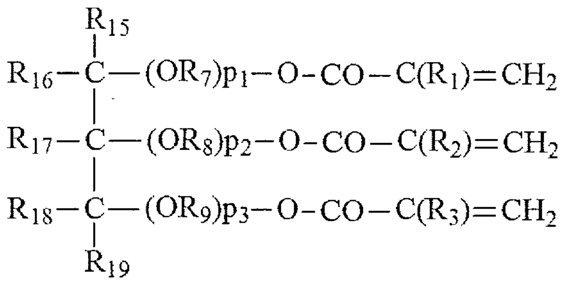

(I)

[worin $R_1$ bis $R_3$ jeweils unabhängig ein Wasserstoffatom oder eine Methylgruppe darstellen; $R_7$ bis $R_9$ jeweils unabhängig $-CH(R_{13})-CH(R_{14})-$ (worin $R_{13}$ und $R_{14}$ jeweils unabhängig ein Wasserstoffatom oder eine Alkylgruppe mit 1 bis 15 Kohlenstoffatomen darstellen) oder $-(CH_2)_4-$ darstellen; $p_1$ bis $p_3$ jeweils unabhängig eine ganze Zahl von 0 bis 10 darstellen und $R_{15}$ bis $R_{19}$ jeweils unabhängig ein Wasserstoffatom oder eine Alkylgruppe mit 1 bis 10 Kohlenstoffatomen darstellen]; einer Verbindung (a-2), dargestellt durch eine Formel (II)

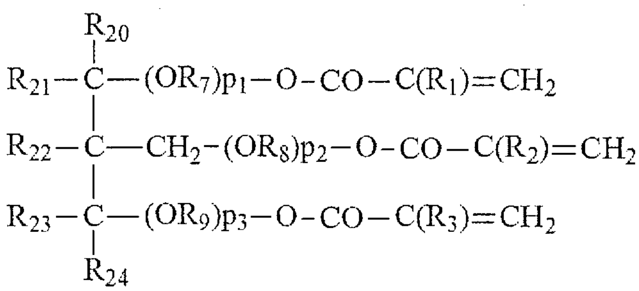

(II)

[worin $R_1$ bis $R_3$ jeweils unabhängig ein Wasserstoffatom oder eine Methylgruppe darstellen; $R_7$ bis $R_9$ jeweils unabhängig $-CH(R_{13})-CH(R_{14})-$ (worin $R_{13}$ und $R_{14}$ jeweils unabhängig ein Wasserstoffatom oder eine Alkylgruppe mit 1 bis 5 Kohlenstoffatomen darstellen) oder $-(CH_2)_4-$ darstellen; $p_1$ bis $p_3$ jeweils unabhängig eine ganze Zahl von 0 bis 10 darstellen und $R_{20}$ bis $R_{24}$ jeweils unabhängig ein Wasserstoffatom oder eine Alkylgruppe mit 1 bis 10 Kohlenstoffatomen darstellen]; einer Verbindung (a-3), dargestellt durch eine Formel (III)

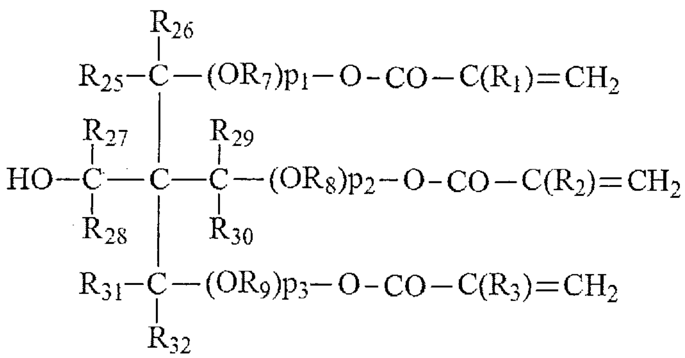

(III)

[worin $R_1$ bis $R_3$ jeweils unabhängig ein Wasserstoffatom oder eine Methylgruppe darstellen; $R_7$ bis $R_9$ jeweils unabhängig $-CH(R_{13})-CH(R_{14})-$ (worin $R_{13}$ und $R_{14}$ jeweils unabhängig ein Wasserstoffatom oder eine Alkylgruppe mit 1 bis 5 Kohlenstoffatomen darstellen) oder $-(CH_2)_4-$ darstellen; $p_1$ bis $p_3$ jeweils unabhängig eine ganze Zahl von 0 bis 10 darstellen und $R_{25}$ bis $R_{32}$ jeweils unabhängig ein Wasserstoffatom oder eine Alkylgruppe mit 1 bis 10

Kohlenstoffatomen darstellen]; einer Verbindung (a-4), dargestellt durch eine Formel (IV)

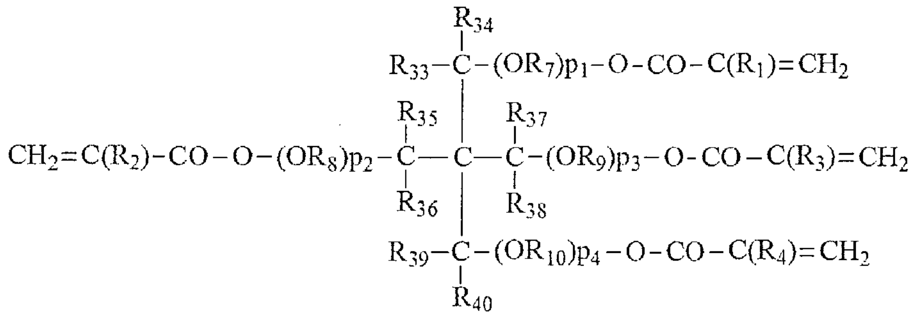

(IV)

[worin $R_1$ bis $R_4$ jeweils unabhängig ein Wasserstoffatom oder eine Methylgruppe darstellen; $R_7$ bis $R_{10}$ jeweils unabhängig $-CH(R_{13})-CH(R_{14})-$ (worin $R_{13}$ und $R_{19}$ jeweils unabhängig ein Wasserstoffatom oder eine Alkylgruppe mit 1 bis 5 Kohlenstoffatomen darstellen) oder $-(CH_2)_4-$ darstellen; $p_1$ bis $p_4$ jeweils unabhängig eine ganze Zahl von 0 bis 10 darstellen und $R_{33}$ bis $R_{40}$ jeweils unabhängig ein Wasserstoffatom oder eine Alkylgruppe mit 1 bis 10 Kohlenstoffatomen darstellen] und

einer Verbindung (a-5), dargestellt durch eine Formel (V)

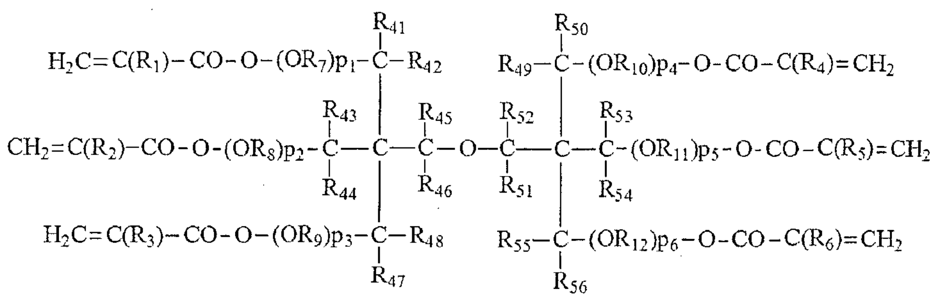

(V)

[worin $R_1$ bis $R_6$ jeweils unabhängig ein Wasserstoffatom oder eine Methylgruppe darstellen; $R_7$ bis $R_{12}$ jeweils unabhängig $-CH(R_{13})-CH(R_{14})-$ (worin $R_{13}$ und $R_{19}$ jeweils unabhängig ein Wasserstoffatom oder eine Alkylgruppe mit 1 bis 5 Kohlenstoffatomen darstellen) oder $-(CH_2)_4-$ darstellen; $p_1$ bis $p_6$ jeweils unabhängig eine ganze Zahl von 0 bis 10 darstellen und $R_{41}$ bis $R_{56}$ jeweils unabhängig ein Wasserstoffatom oder eine Alkylgruppe mit 1 bis 10 Kohlenstoffatomen darstellen].

3. Ultraviolett-härtbare Zusammensetzung für eine optische Platte gemäß Anspruch 1, wobei die (Meth)acrylat-Verbindung (a), die intramolekular keine cyclische Gruppierung hat und die eine Funktionalität von drei oder mehr hat, Tri(meth)acrylat eines Ethylenoxid- oder Propylenoxid-Adduktes von Trimethylolpropan ist.

4. Ultraviolett-härtbare Zusammensetzung für eine optische Platte gemäß einem der Ansprüche 1 bis 3, wobei die monofunktionelle (Meth)acrylat-Verbindung (b), die ein Homopolymer bildet, das eine Glasübergangstemperatur von 20°C oder weniger hat, wenigstens eins von Phenoxyethylacrylat und Ethylcarbitolacrylat ist.

5. Ultraviolett-härtbare Zusammensetzung für eine optische Platte gemäß einem der Ansprüche 1 bis 4, die als die radikalisch polymerisierbare Verbindung ein Epoxy(meth)acrylat umfasst.

6. Optische Platte, bei der wenigstens eine lichtreflektierende Schicht und eine lichtdurchlässige Schicht, die einen gehärteten Film einer Ultraviolett-härtbaren Zusammensetzung umfasst, auf einem Substrat gestapelt sind; Information durch Einfallenlassen eines blauen Laserstrahls auf die optische Platte von einer Seite der lichtdurchlässigen Schicht reproduziert wird und die Ultraviolett-härtbare Zusammensetzung die Ultraviolett-härtbare Zusammensetzung für eine optische Platte gemäß einem der Ansprüche 1 bis 5 ist.

7. Optische Platte gemäß Anspruch 6, wobei die lichtdurchlässige Schicht eine Dicke von 70 bis 110 μm hat.

8. Optische Platte gemäß Anspruch 6 oder 7, wobei eine Deckschicht eine harte Überzugsschicht ist.

## Revendications

**1.** Une composition durcissable par ultraviolet pour un disque optique, la composition durcissable par ultraviolet étant utilisée pour une couche transmettant la lumière d'un disque optique, dans lequel au moins une couche réfléchissant la lumière et la couche transmettant la lumière sont empilées sur un substrat, et une information est reproduite en amenant un faisceau laser à être incident sur le disque optique à partir d'un côté de la couche transmettant la lumière, la composition durcissable par ultraviolet comprenant:

un composé polymérisable par voie radicalaire et un initiateur de polymérisation, le composé polymérisable par voie radicalaire comprenant un composé de (méth)acrylate (a) qui ne présente pas intramoléculairement un groupement cyclique et qui a une fonctionnalité de trois ou plus, et un composé de (méth)acrylate monofonctionnel (b) qui forme un homopolymère ayant une température de transition vitreuse de 20°C ou moins,
où un film durci de la composition durcissable par ultraviolet a une température de transition vitreuse de 50°C ou moins;
un module de perte (E") à 60°C dans un spectre viscoélastique dynamique du film durci de la composition durcissable par ultraviolet, mesuré à une fréquence de 3,5 Hz, est de 10MPa ou moins;
un facteur de perte (tanδ) à 60°C dans le spectre viscoélastique dynamique du film durci de la composition durcissable par ultraviolet, mesuré à une fréquence de 3,5 Hz, est de 0,25 ou moins;
un module d'élasticité (25°C), mesuré par indentation d'un pénétrateur Vickers ayant un angle au sommet de 136° sous une charge de 100 mN dans une surface du film durci de la composition durcissable par ultraviolet, est 1500 MPa ou moins.

**2.** La composition durcissable par ultraviolet pour un disque optique selon la revendication 1, dans laquelle le composé de (méth)acrylate (a) qui ne présente pas intramoléculairement un groupement cyclique et qui a une fonctionnalité de trois et plus est un ou plusieurs composé(s) choisi(s) parmi un composé (a-1) représenté par la formule (I)

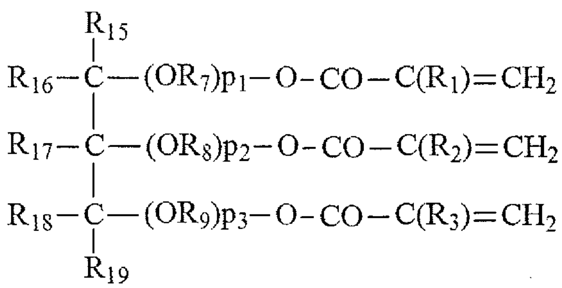

(I)

[dans laquelle $R_1$ à $R_3$ représentent chacun indépendamment un atome d'hydrogène ou un groupe méthyle; $R_7$ à $R_9$ représentent chacun indépendamment $-CH(R_{13})-CH(R_{14})-$(où $R_{13}$ et $R_{14}$ représentent chacun indépendamment un atome d'hydrogène ou un groupe alkyle ayant 1 à 5 atome (s) de carbone) ou $-(CH_2)_4-$; $p_1$ à $p_3$ représentent chacun indépendamment un nombre entier de 0 à 10; et $R_{15}$ à $R_{19}$ représentent chacun indépendamment un atome d'hydrogène ou un groupe alkyle ayant 1 à 10 atome(s) de carbone];
un composé (a-2) représenté par une formule (II)

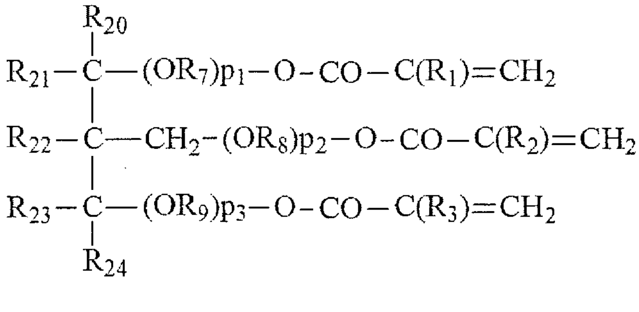

(II)

[dans laquelle $R_1$ à $R_3$ représentent chacun indépendamment un atome d'hydrogène ou un groupe méthyle; $R_7$ à $R_9$ représentent chacun indépendamment $-CH(R_{13})-CH(R_{14})-$(où $R_{13}$ et $R_{14}$ représentent chacun indépendamment un atome d'hydrogène ou un groupe alkyle ayant 1 à 5 atome(s) de carbone) ou $-(CH_2)_4-$; $p_1$ à $p_3$ représentent

chacun indépendamment un nombre entier de 0 à 10; et $R_{20}$ à $R_{24}$ représentent chacun indépendamment un atome d'hydrogène ou un groupe alkyle ayant 1 à 10 atome(s) de carbone];
un composé (a-3) représenté par une formule (III)

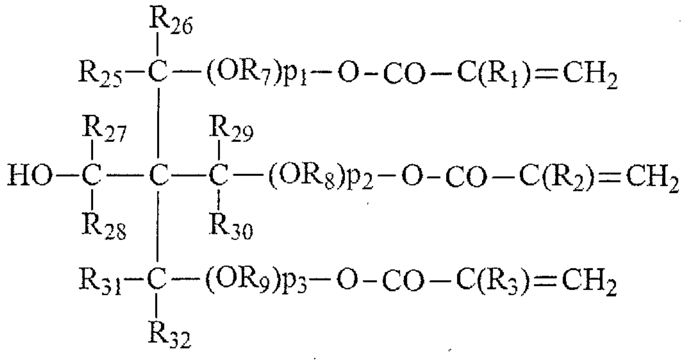

(III)

[dans laquelle $R_1$ à $R_3$ représentent chacun indépendamment un atome d'hydrogène ou un groupe méthyle; $R_7$ à $R_9$ représentent chacun indépendamment $-CH(R_{13})-CH(R_{19})-$ (où $R_{13}$ et $R_{14}$ représentent chacun indépendamment un atome d'hydrogène ou un groupe alkyle ayant 1 à 5 atome(s) de carbone) ou $-(CH_2)_4-$; $p_1$ à $p_3$ représentent chacun indépendamment un nombre entier de 0 à 10; et $R_{25}$ à $R_{32}$ représentent chacun indépendamment un atome d'hydrogène ou un groupe alkyle ayant 1 à 10 atome(s) de carbone];
un composé (a-4) représenté par une formule (IV)

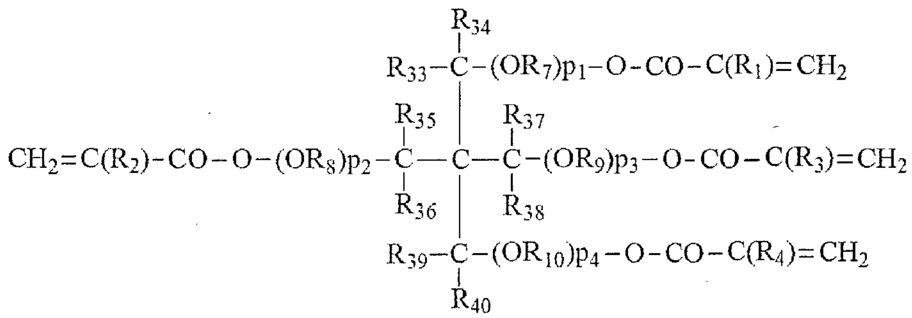

(IV)

[dans laquelle $R_1$ à $R_3$ représentent chacun indépendamment un atome d'hydrogène ou un groupe méthyle; $R_7$ à $R_{10}$ représentent chacun indépendamment $-CH(R_{13})-CH(R_{14})-$(où $R_{13}$ et $R_{14}$ représentent chacun indépendamment un atome d'hydrogène ou un groupe alkyle ayant 1 à 5 atome (s) de carbone) ou $-(CH_2)_4-$; $p_1$ à $p_4$ représentent chacun indépendamment un nombre entier de 0 à 10; et $R_{33}$ à $R_{40}$ représentent chacun indépendamment un atome d'hydrogène ou un groupe alkyle ayant 1 à 10 atome(s) de carbone]; et
un composé (a-5) représenté par une formule (V)

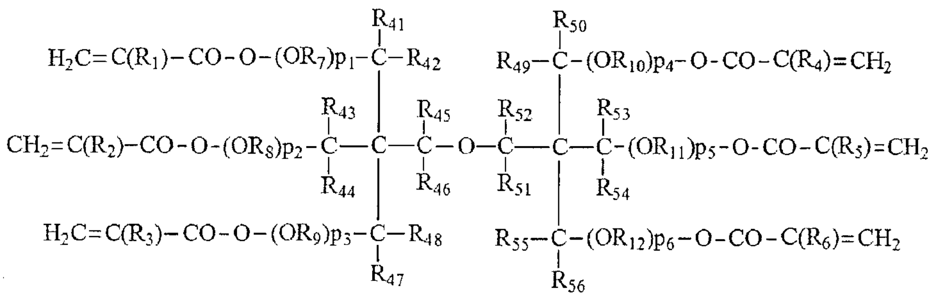

(V)

[dans laquelle $R_1$ à $R_3$ représentent chacun indépendamment un atome d'hydrogène ou un groupe méthyle; $R_7$ à $R_{12}$ représentent chacun indépendamment $-CH(R_{13})-CH(R_{14})-$(où $R_{13}$ et $R_{14}$ représentent chacun indépendamment un atome d'hydrogène ou un groupe alkyle ayant 1 à 5 atome (s) de carbone) ou $-(CH_2)_4-$; $p_1$ à $p_6$ représentent

chacun indépendamment un nombre entier de 0 à 10; et $R_{41}$ à $R_{56}$ représentent chacun indépendamment un atome d'hydrogène ou un groupe alkyle ayant 1 à 10 atome(s) de carbone].

**3.** La composition durcissable par ultraviolet pour un disque optique selon la revendication 1, dans laquelle le composé de (méth)acrylate (a), qui ne présente pas intramoléculairement un groupement cyclique et qui a une fonctionnalité de trois ou plus, est le tri(méth)acrylate de l'adduct d'éthylène oxyde ou de propylène oxyde et de triméthylol propane.

**4.** La composition durcissable par ultraviolet pour un disque optique selon l'une quelconque des revendications 1 à 3, dans laquelle le composé de (méth)acrylate monofonctionnel (b), qui forme un homopolymère ayant une température de transition vitreuse de 20°C ou moins est au moins l'un de l'acrylate de phénoxyéthyl et de l'acrylate d'éthylcarbitole.

**5.** La composition durcissable par ultraviolet pour un disque optique selon l'une quelconque des revendications 1 à 4, comprenant, en tant que composé polymérisable par voie radicalaire, un époxy(méth)acrylate.

**6.** Un disque optique, dans lequel au moins une couche réfléchissant la lumière et une couche transmettant la lumière qui comprend un film durci de la composition durcissable par ultraviolet sont empilées sur en substrat; l'information est reproduite en amenant un faisceau laser à être incident sur le disque optique à partir d'un côté de la couche transmettant la lumière et la composition durcissable par ultraviolet est la composition durcissable par ultraviolet pour un disque optique selon l'une quelconque des revendications 1 à 5.

**7.** Le disque optique selon la revendication 6, dans lequel la couche transmettant la lumière a une épaisseur de 70 à 110 $\mu$m.

**8.** Le disque optique selon la revendication 6 ou 7, dans lequel une couche supérieure est une couche de revêtement dure.

FIG. 1

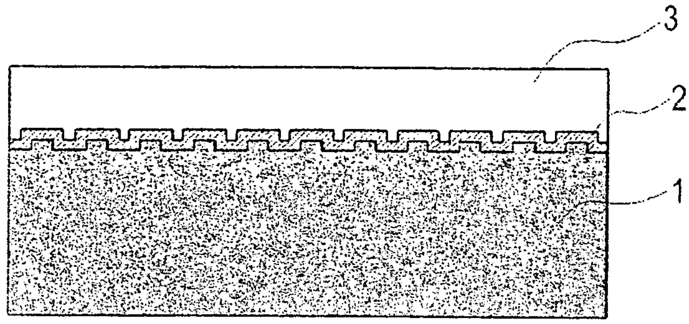


FIG. 2

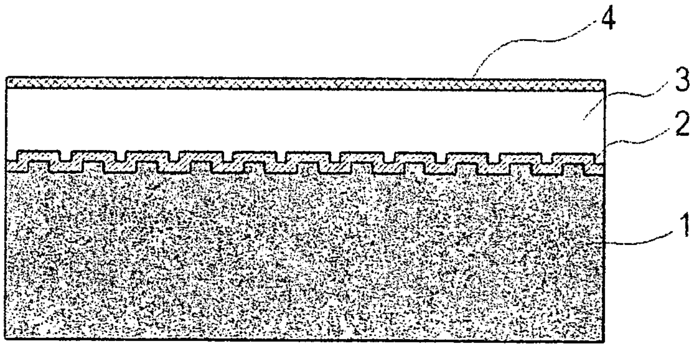


FIG. 3

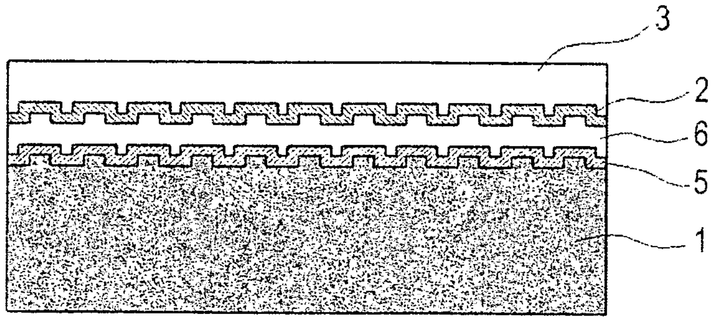


FIG. 4

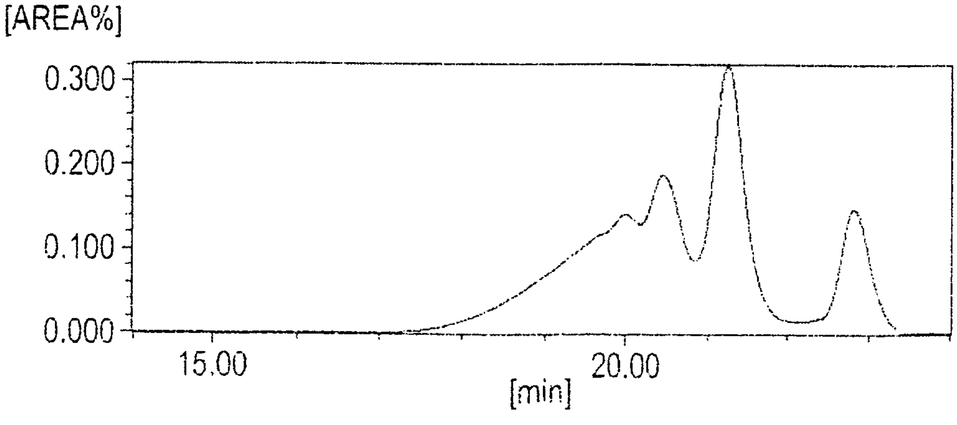

FIG. 5

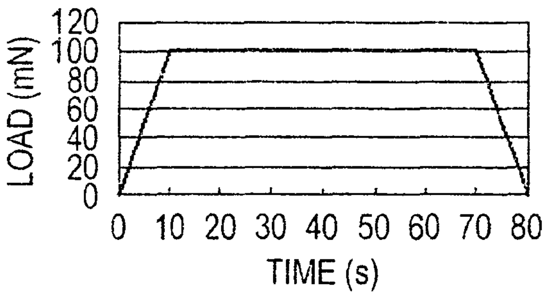

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009004960 A
- JP 2003123316 A
- JP 2007238819 A
- JP 2009009638 A
- US P5904795 A